Europäisches Patentamt

(19) European Patent Office

Office européen des brevets

(11) **EP 1 362 283 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(21) Anmeldenummer: **01997939.2**

(22) Anmeldetag: **20.11.2001**

(51) Int Cl.⁷: **G06F 3/14**

(86) Internationale Anmeldenummer:
**PCT/EP2001/013386**

(87) Internationale Veröffentlichungsnummer:
**WO 2002/043365 (30.05.2002 Gazette 2002/22)**

(54) **VERFAHREN UND VORRICHTUNG ZUM DARSTELLEN EINES AUS PIXELN AUFGEBAUTEN BILDES**

METHOD AND DEVICE FOR DISPLAYING AN IMAGE COMPOSED OF PIXELS

PROCEDE ET DISPOSITIF PERMETTANT D'AFFICHER UNE IMAGE CONSTITUEE DE PIXELS

(84) Benannte Vertragsstaaten:
**AT BE CH CY DE DK ES FI FR GB GR IE IT LI LU MC NL PT SE TR**

(30) Priorität: **21.11.2000 DE 10057828**

(43) Veröffentlichungstag der Anmeldung:
**19.11.2003 Patentblatt 2003/47**

(73) Patentinhaber: **Kohn, Jürgen**
**73431 Aalen (DE)**

(72) Erfinder: **Kohn, Jürgen**
**73431 Aalen (DE)**

(74) Vertreter: **Weitzel, Wolfgang, Dr.-Ing.**
**Dr. Weitzel & Partner**
**Patentanwälte**
**Friedenstrasse 10**
**89522 Heidenheim (DE)**

(56) Entgegenhaltungen:
EP-A- 0 917 071    WO-A-01/59974
WO-A-99/40507    US-A- 6 133 913

• BICKMORE T ET AL: "WEB PAGE FILTERING AND RE-AUTHORING FOR MOBILE USERS" COMPUTER JOURNAL, OXFORD UNIVERSITY PRESS, SURREY, GB, Bd. 42, Nr. 6, 1999, Seiten 534-546, XP000920338 ISSN: 0010-4620

**Beschreibung**

Die Erfindung betrifft ein Verfahren und eine Vorrichtung zum Darstellen eines aus Pixeln aufgebauten Bildes auf einer pixelorientierten Ausgabevorrichtung. Insbesondere bezieht sich die Erfindung auf die bildliche Darstellung eines in digitaler Form vorliegenden Dokumentes, das dem Fachmann kurz als digitales Dokument bekannt ist.

Die Darstellung von aus Pixeln aufgebauten Bildern ist trotz unterschiedlichster Monitortechnologie die Grundlage aller Informationsdarstellungen in Form von Bildern. Die Bilder sind aus einzelnen, aneinander gereihten Pixeln aufgebaut, was bedeutet, daß eine bestimmte Anzahl von Bildinformationen zu einer bestimmten Größe des Bildes führt.

Die Bildinformationen selber müssen dabei nicht bereits in Pixelfomat vorliegen sondern können Informationen sein, die zur Darstellung eines pixelorientierten Bildes dienen, beispielsweise ein Internet-Dokument. Aus einem solchen Internet-Dokument können alle notwendigen Informationen gewonnen werden, die erforderlich sind, um das letztendlich dargestellte aus Pixeln aufgebaute Bild zu erzeugen. Die Verarbeitung der Informationsdatei, beispielsweise eines Hypertext-Dokumentes, erfolgt in der Regel durch eine entsprechend eingerichtete Computereinrichtung.

Im Zeitalter der weitläufigen Vernetzung verschiedenartiger technischer Systeme, wie z. B. Computersysteme, Datenbanken, Mobiltelefone, Geldautomaten oder anderer Systeme, gehen die Bestrebungen dahin, Daten bzw. Informationen möglichst zentral abzulegen, so daß diese von einem beliebigen Ort aus abgerufen, universell verwendet und auf einem Ausgabemedium bzw. einer Ausgabevorrichtung dargestellt werden können. Eine besondere Bedeutung kommt dabei der weltweiten Vernetzung durch das Internet ("world-wide web" oder WWW) zu.

Die Darstellung der Informationen oder Daten in einem solchen Netzwerk erfolgt als Bild, das pixelorientiert auf dem Ausgabemedium bzw. der Ausgabevorrichtung zur Verfügung gestellt wird. Die Daten umfassen eine gewisse Informationsdichte an Bilddaten, so daß die Darstellung an eine feste Bildgröße, das heißt eine bestimmte Anzahl von Pixeln gebunden ist. Die Vielzahl der Ausgabevorrichtungen umfaßt jedoch eine Vielzahl von Größenformaten, beispielsweise seien unterschiedlich große Bildschirme von Personal-Computern/Workstation (üblicherweise 14 Zoll bis 21 Zoll Bildschirmdiagonale) genannt, Displays bzw. Anzeigevorrichtungen von handheld-Computem, Laptop/Notebook-Computem oder auch Displays von Mobiltelefonen oder PDA's (Personal Digital Assistant). Selbst mit einer einzigen Anzeigevorrichtung eines Personal-Computers kann die eigentliche Darstellung in unterschiedlichen Größenformaten erforderlich bzw. wünschenswert sein, z. B. wenn der Nutzer, der das Bild in einem Fenster auf dem Desktop seines Computers, das heißt innerhalb eines bestimmten Bereiches der Bildschirmoberfläche, darstellen möchte, unterschiedliche Fenstergrößen benutzt und damit eine bestimmte Anzeigefläche für das Bild auf seinem Bildschirm vorgibt.

Um diese Abweichung zwischen den eine vorgegebene Bildgröße bestimmenden zentral abgespeicherten Informationen und der gewünschten Ausgabegröße der Informationen als Bild auszugleichen, ist es heutzutage üblich, wie folgt vorzugehen:

1. das Ausgangsbild ist kleiner als die Bildfläche, auf der dieses Bild dargestellt werden soll;
2. das Ausgangsbild ist größer als die Bildfläche, auf der dieses dargestellt werden soll.

Im ersten Fall wird man das Ausgangsbild in seiner ursprünglichen Größe darstellen und den verbleibenden Rand auf der Bildfläche unifarben oder gemustert ausfüllen. Im zweiten Fall wird man am Rande des Darstellungsbereiches. sogenannte Scroll-Balken vorsehen und auf der restlichen Bildfläche einen Ausschnitt des ursprünglichen Bildes entsprechend der Größe der Bildfläche darstellen. Mit den Scroll-Balken ist es dann möglich, über das ursprüngliche Bild hinweg zu fahren (zu scrollen), das heißt das ursprüngliche Bild wird sozusagen hinter dem sichtbaren Ausschnitt verschoben, so daß ein angrenzender Ausschnitt dargestellt ist. Dieses Vorgehen ist in der Dokumentation gängiger Anwendersoftware beschrieben z.B von Microsoft®.

In beiden Fällen ist es weiterhin möglich, die Größe einzelner im Ausgangsbild eingebundener Elemente unverändert zu lassen (1:1), und diese einzelnen Elemente in der zur Ausgabe zur Verfügung stehenden Bildfläche zu verteilen. Im ersten Fall sind dieser Darstellungstechnik selbstverständlich Grenzen hinsichtlich einer minimal erforderlichen Bildfläche gesetzt.

Diese Art und Weise der Darstellung eines aus Pixeln aufgebauten Bildes auf einer pixelorientierten Ausgabevorrichtung ist nachteilig, da der Gesamteindruck des Bildes und damit der darzustellenden Informationen gestört wird und der Betrachter nicht frei entscheiden kann, in welcher Größe er das Gesamtbild betrachten möchte, das heißt in welcher Größe das Gesamtbild dargestellt wird.

EP-A-0 917 071 zeigt die Skalierung einer Internetseite für die Darstellung als physikalisches Dokument in einer vorgegebenen Größe, wobei semantische Verkümpfung konvertiert werden. Die Merkmale des offenbaren Verfahrens sind im Oberbegriff von Anspruch 1 zusammen gefaßt.

Um zentral abgelegte Bildinformationen auf unterschiedlichen Ausgabevorrichtungen geeignet darstellen zu können, sind weiterhin Systeme bekannt, die die Bildinformationen vor der Ausgabe entsprechend der Merkmale der Ausgabevorrichtung konvertieren. Somit kann erreicht werden, daß auf ein Ablegen von verschiedenen Bildinformationssätzen nebeneinander, wobei für verschiedene Ausgabevorrichtungen verschiedene Sätze abgelegt werden, verzichtet werden kann. Diese Systeme verwenden dabei Datenbanken, in denen festgelegt ist, welcher Typ von Ausgabevorrichtung welche Darstellungsmöglichkeiten bietet. Wenn jetzt die Bildinformationen auf einer spezifischen Ausgabevorrichtung ausgegeben werden sollen, so wird mittels der Datenbank festgelegt, welche einzelnen Bildobjekte oder -parameter wie geändert werden müssen, daß eine fehlerfreie Darstellung auf der spezifischen Ausgabevorrichtung möglich ist. Nachteilig an solchen Systemen, die Datenbanken verwenden, ist, daß mit Einführung immer neuer Ausgabevorrichtungen auf dem Markt diese Datenbanken ständig aktualisiert werden müssen, um eine fehlerfreie Ausgabe auch auf neuentwickelten Ausgabegeräten zu ermöglichen.

Zudem sind die bekannten System hinsichtlich der Dynamik der größenangepaßten Darstellung verbesserungsbedürftig. Wenn beispielsweise eine Internetseite mittels eines Web-Browsers in einem Browserfenster auf dem Desktop eines PC's dargestellt wird, so sollte es dem Benutzer zu jederzeit möglich sein, die Größe des Browserfensters zu ändern - beispielsweise durch ziehen des Rahmens des Browserfensters mit einer grafischen Eingaevorrichtung - , wobei die im Fenster dargestellte Internetseite möglichst flüssig mitgleiten sollte, ohne daß der Gesamteindruck gestört wird.

Aufgabe der Erfindung ist es, die genannten Nachteile des Standes der Technik zu vermeiden und ein Verfahren bzw. eine Vorrichtung darzustellen, mit dem ein aus Pixeln aufgebautes Bild in einer beliebigen, gewünschten Größe unabhängig von der Größe des Ausgangsbildes bzw. der eine bestimmte Größe vorgebenden Ausgangsbilddaten vollständig dargestellt werden kann. Das Verfahren bzw. die Vorrichtung soll sich durch einen einfachen Aufbau und geringen Rechenleistungs- und Speicherkapazitätsverbrauch auszeichnen. Insbesondere soll die dynamische Darstellung von zentral abgelegten Bildinformationen bzw. eines digitalen Dokumentes als Bild auf einer Vielzahl von unterschiedlichen Ausgaberichtungen auf eine einfache, effektive Art erreicht werden.

Diese Aufgabe wird durch die unabhängigen Ansprüche gelöst Die abhängigen Ansprüche beschreiben besonders vorteilhafte Ausgestaltungen der Erfindung.

Mit dem erfindungsgemäßen Verfahren kann besonders leicht eine hinsichtlich der Größe willkürliche Darstellung, die durch einen Benutzer frei vorgegeben bzw. beliebig geändert werden kann, von Bildinformationen als Bild auf einer Ausgabevorrichtung erreicht werden, wobei das Verfahren eine besondere Dynamik erlaubt, dadurch daß eine Größenänderung des Darstellungsbereiches zu jeder Zeit möglich ist und zu einer unmittelbaren Größenanpassung des dargestellten Bildes ohne nachteilige Auswirkungen auf den visuellen Gesamteindruck führt

Bei dem erfindungsgemäßen Verfahren werden die Ausgangsbilddaten eines in digitaler Form vorliegenden Dokumentes, d.h eines digitalen Dokumentes, in einen Arbeitsspeicher eingelesen. Die Ausgangsbilddaten umfassen Dimensionsdaten des digitalen Dokumentes, die für eine Darstellung des digitalen Dokumentes in einer vorgegebenen Größe erforderlich sind, beispielsweise die vorgegebene Höhe und Breite des darzustellenden Gesamtbildes.

Gemäß des erfindungsgemäßen Verfahrens werden weiterhin die Dimensionsdaten des gewünschten Ausgabeformates in den Arbeitsspeicher eingelesen. Das Ausgabeformat entspricht der Bildgröße, mit der das Bild auf der Ausgabevorrichtung dargestellt werden soll.

Mittels mindestens einer mit dem Arbeitsspeicher verschalteten Recheneinheit werden die Dimensionsdaten des Ausgangsbildes bzw. des digitalen Dokumentes und die Dimensionsdaten des Zielbildes verarbeitet und in Abhängigkeit dieser Dimensionsdaten ein Skalierungsfaktor erzeugt

Mittels der Recheneinheit werden die Dimensionsdaten in den Ausgangsbitddaten mit dem Skalierungsfaktor multipliziert und als Zielbilddaten im Arbeitsspeicher oder einem anderen Speichermedium gespeichert. Durch diesen Vorgang wird die Ausgangsbildgröße auf die gewünschte Zielbildgröße angepaßt und aus dem ursprünglich erfaßten digitalen Dokument wird ein modifiziertes digitales Dokument erstellt.

Die Zielbilddaten werden an die Ausgabevorrichtung übermittelt, und das Zielbild wird entsprechend der Zielbilddaten auf der Ausgabevorrichtung dargestellt.

Gemäß des erfindungsgemäßen Verfahrens werden die Dimensionierungsdaten des gewünschten Ausgabeformates, insbesondere des Ausgabefensters, in wiederkehrenden Zeitintervallen überprüft. Bei geänderten Dimensionsdaten wird der Skalierungsfaktor neu erzeugt, und aus den Ausgangsbilddaten werden die Zielbilddaten neu berechnet. Dabei können sowohl die vormals berechneten Zielbilddaten als neue Ausgangsbilddaten genutzt werden, als auch die ursprünglichen Ausgangsbilddaten. Die Überprüfung in wiederkehrenden Zeitintervallen muß nicht unbedingt regelmäßig stattfinden, jedoch ist eine ständige Überwachung der Dimensionsdaten des gewünschten Ausgabeformates vorteilhaft.

Die Erfindung ermöglich somit eine dynamische Darstellung des Bildes auf der Ausgabevorrichtung. Ein Benutzer kann jeder Zeit eingreifen und die Größenverhältnisse des Bereiches ändern, in welchem das Bild dargestellt werden soll. Durch die Überprüfung dieser Größenparameter des Darstellungsbereiches in vorgegebenen Zeitintervallen läßt sich beispielsweise eine auf einem Desktop eines Computers dargestellte Internetseite beliebig groß und klein ziehen, ohne daß der Gesamteindruck der dargestellten Internetseite verfälscht wird.

Das erfindungsgemäße Verfahren eignet sich insbesondere für die Darstellung einer Internetseite. Ei-

ne Internetseite ist in der Regel auf einem Computersystem, Web-Server genannt, gespeichert. Ein Benutzer eines individuellen PC's, Client-Rechner genannt, der eine solche Internetseite vom Web-Server herunterladen und auf der Ausgabevorrichtung seines PC's darstellen möchte, benutzt gewöhnlich einen sogenannten Web-Browser oder Internet-Browser. Ein Internet-Browser empfängt über eine hergestellte Verbindung, insbesondere über eine Telekommunikationsleitung, zwischen dem Client-Rechner und dem Server-System eines Internet-Providers Daten bzw. Informationen von dem Web-Server, die sogenannte Internetseite oder ein sogenanntes Internet-Dokument Die Internetseite umfaßt Informationen zur Darstellung eines pixelorientierten Bildes und ist häufig mittels eines speziellen Codes Verschlüssen, insbesondere mittels der sogenannten Hypertext Markup Language (HTML). Dieser spezielle Code umfaßt einzelne Datenblöcke, die sogenannten HTML-Tags. Jeder HTML-Tag umfaßt die Ausgangsbilddaten eines Bereiches des gesamten Bildes, das heißt eines Teilstückes der Internetseite bzw. eines in der Internetseite eingebetteten grafischen Objektes. Diese Ausgangsbilddaten umfassen Dimensionsdaten und insbesondere die Bildhöhe und die Bildbreite, die die Größe des Ausgangsbildes bestimmen.

Die Ausgangsbilddaten umfassen insbesondere Informationsblöcke bzw. bei in HTML eingebetteten Bildern HTML-Tags, die einzelne interaktive Elemente definieren, zum Beispiel interaktive Verknüpfungen oder schaltbare Flächen. Diese Elemente können dynamisch und/oder intelligent sein, d.h zum Beispiel auf bestimmte Eingaben reagieren oder das Ausführen bestimmter Applikationen durch den PC verursachen.

Die Dimensionsdaten des gewünschten Ausgabeformates auf der Ausgabevorrichtung können insbesondere die Fensterdaten eines Internet-Browsers umfassen. Diese Fensterdaten umfassen vorzugsweise die Höhe und die Breite der Bildfläche des Fensters, in dem das Ausgangsbild dargestellt werden soll.

Bei einer besonders vorteilhaften Ausführung des erfindungsgemäßen Verfahrens wird der Skalierungsfaktor in Abhängigkeit der Bildhöhe und der Bildbreite des Ausgangsbildes und der Bildhöhe und der Bildbreite der Bildfläche des Fensters des Internet-Browsers erzeugt Umfassen die Ausgangsbilddaten beispielsweise Dimensionsdaten mit einer Bildbreite von 800 Pixeln und einer Bildhöhe von 600 Pixeln und die Dimensionsdaten des Zielbildes eine Bildbreite von 1024 Pixeln und eine Bildhöhe von 768 Pixeln, so kann der Skalierungsfaktor durch (1024x768)/(800x600) =1,6384 berechnet werden. Der Skalierungsfaktor kann auch bei den gleichen vorgegebenen Dimensionsdaten nur in Abhängigkeit der Bildbreiten 1024/800=1,28 oder der Bildhöhen 768/600=1,28 berechnet werden. Selbstverständlich können auch andere Größen in die Berechnung mit einbezogen werden. insbesondere die Proportionen des Ausgangsbildes können durch eine geeignete Berechnung des Skalierungsfaktors beibehalten oder, wenn gewünscht, auch gezielt beeinflußt werden.

Die Ausgangsbilddaten werden vorteilhaft seriell in den Arbeitsspeicher eingelesen, das heißt Datenblock für Datenblock oder HTML-Tag für HTML-Tag. Der eingelesene Datenblock oder HTML-Tag wird auf skalierbare Größen überprüft, und alle skalierbaren Größen werden mit dem Skalierungsfaktor multipliziert und durch das Ergebnis dieser Multiplikation ersetzt. Der so modifizierte Datenblock wird anschließend an den Internet-Browser übermittelt und mittels des Internet-Browsers verarbeitet bzw. übersetzt, in der Art, daß das darzustellende Bild Zug um Zug aufgebaut wird. Es ist selbstverständlich auch denkbar, zuerst alle Datenblökke insbesondere HTML-Tags einzulesen, auf skalierbare Größen zu überprüfen, die Größen zu skalieren und anschließend die Datenblöcke an den Internet-Browser zu übermitteln, so daß das darzustellende Bild in einer relativ kurzen Zeit aufgebaut wird.

Da bei diesem Ausführungsbeispiel alle skalierbaren Größen mit dem gleichen Skalierungsfaktor multipliziert werden, wird erreicht, daß der Eindruck der Internetseite, wie er von dem Autor der Internetseite gewünscht ist, auch durch Änderung der Bildgröße nicht verändert wird. Dies zeichnet das Verfahren gegenüber bekannten Verfahren aus, die lediglich einzelne Objekte der Internetseite herausgreifen und konvertieren, so daß der Gesamteindruck des Bildes gestört wird.

Die Skalierung der Ausgangsbilddaten kann in einer Ausführung des erfindungsgemäßen Verfahrens auf der Netzwerkseite des Internet-Servers erfolgen. Das heißt, der Skalierungsfaktor und die Zielbilddaten werden insbesondere mittels der Recheneinheit des Internet-Servers erzeugt und an den Client-Rechner übermittelt Die übermittelten Zielbilddaten werden. mittels des Client-Rechners auf der mit dem Client-Rechner verbundenen Ausgabevorrichtung dargestellt, insbesondere mittels eines Internet-Browsers, welcher auf dem Client-Rechner installiert ist. Auch die Zwischenschaltung eines sogenannten Proxy-Servers zwischen Internet-Server und Client-Rechner ist möglich. Vorteilhaft sind dann die Ausgangsbilddaten bzw. das digitale Dokument auf dem Internet-Server abgelegt und der Skalierungsfaktor bzw. die Zielbilddaten werden mittels des Proxy-Servers erzeugt. Die Darstellung des modifizierten digitalen Dokumentes erfolgt auch dann weiterhin durch den Client-Rechner, von dem die Dimensionsdaten des gewünschten Ausgabeformates durch den Proxy-Server empfangen werden.

Der Skalierungsfaktor und die Zielbilddaten können aber auch auf der Netzwerkseite des Client-Rechners, insbesondere mittels der Recheneinheit des Client-Rechners erzeugt und im Arbeitsspeicher bzw. einem anderen Speichermedium, das am Client-Rechner angeschlossen ist, abgelegt werden. Auch hier werden die so erzeugten Zielbilddaten mittels des Client-Rechners auf der mit dem Client-Rechner verbundenen Ausgabevorrichtung dargestellt. Der Vorteil des zuerst beschriebenen Verfahrens liegt darin, daß alle Internetnutzer, die auf die auf dem Server gespeicherten Internetseiten zugreifen, ein entsprechend der Größe des Ausgabefensters ihres Client-Rechners skaliertes Bild empfangen. Es wird auf der Seite des Client-Rechners keine zusätzliche Prozessorleistung bzw. kein zusätzlicher Platzbedarf im Arbeitsspeicher des Client-Rechners benötigt, um die empfangenen Bilddaten zu skalieren, insbesondere sind keinerlei zusätzliche Programmodule auf der Seite des Client-Rechners, wie zum Beispiel Plugins, erforderlich.

Der Vorteil des zuletzt genannten Verfahrens liegt darin, daß ein Internetnutzer eine beliebige Seite irgendeines Internet-Servers . herunterladen kann und das Ausgangsbild entsprechend der Fenstergröße auf dem Desktop des Client-Rechners skaliert wird. Somit ist die Darstellung beliebiger Internetseiten, die auf beliebigen Internet-Servern gespeichert sind, in beliebiger Größe möglich.

Die erfindungsgemäße Vorrichtung umfaßt eine oder mehrere Recheneinheiten und einen Arbeitsspeicher, der mit der Recheneinheit bzw. mit den Recheneinheiten verschaltet ist Die Vorrichtung umfaßt weiterhin ein Speichermedium und/oder einen Bereich des Arbeitsspeichers mit gespeicherten Bilddaten und Dimensionsdaten eines-Ausgangsbildes bzw. eines digitalen Dokumentes und ein Speichermedium und/oder einen Bereich des Arbeitsspeichers mit Dimensionsdaten des gewünschten Ausgabeformates des Zielbildes.

Erfindungsgemäß ist ein Speichermedium und/oder ein Bereich des Arbeitsspeichers mit Daten eines Skalierungsmechanismus zum Skalieren der Ausgangsbilddaten vorgesehen. Weiterhin umfaßt die erfindungsgemäße Vorrichtung ein Speichermedium und/oder einen Bereich des Arbeitsspeichers zum Speichern von Zielbilddaten. Der Skalierungsmechanismus ist derart auf dem Speichermedium bzw. im Arbeitsspeicher durch die mindestens eine Recheneinheit ausführbar abgelegt, daß er die Ausgangsbilddaten empfangen, diese entsprechend der Dimensionsdaten des Zielbildes skalieren und als Zielbilddaten ablegen kann. Dabei umfaßt der Skalierungsmechanismus Mittel zum regelmäßigen Überprüfen bzw. vorteilhaft zum dauerhaften Überwachen der Dimensionsdaten des gewünschten Ausgabeformates und zum erneuten Erzeugen des Skalierungsfaktors und von modifizierten Ausgangsbilddaten durch eine entsprechende Skalierung der Dimensionsdaten in den Ausgangsbilddaten bei geänderten Dimensionsdaten des gewünschten Ausgabeformates.

Die erfindungsgemäße Vorrichtung umfaßt eine Darstellungsvorrichtung, die derart ausgeführt ist, daß sie entsprechend der Zielbilddaten ein aus Pixeln aufgebautes Bild visualisiert. Dies kann z. B. ein Röhrenbildschirm, eine Flüssigkeitskristallanzeige, ein LCD-Display, ein Flachbildschirm, ein Drucker und/oder ein Projektor sein. Selbstverständlich sind auch andere pixeiorientierte Ausgabevorrichtungen denkbar.

Durch das erfindungsgemäße Verfahren und die erfindungsgemäße Vorrichtung ist es erstmals mit minimalen Aufwand möglich, ein aus Pixeln aufgebautes Bild auf eine pixelorientierten Vorrichtung vollständig und in beliebiger Größe darzustellen. Dabei kann besonders vorteilhaft zum einen eine Skalierung eines Ausgangsbildes mittels eines Internet-Servers erfolgen, bzw. ein Skalierungsmechanismus zum Skalieren der Ausgangsbilddaten durch eine Recheneinheit ausführbar in einem Speicher eines Internet-Servers abgelegt sein. Damit ist es für beliebig viele Internetnutzer möglich, mittels ihres Client-Rechners Internetseiten vom Internet-Server herunterzuladen und auf jede beliebige Größe skafiert mittels ihrer Ausgabevorrichtung darzustellen. Zum anderen kann die Skalierung durch einen Client-Rechner erfolgen, bzw. der Skalierungsmechanismus ist in einem Speicher des Client-Rechners ausführbar durch die Recheneinheit des Client-Rechners abgelegt. Somit kann ein Internetnutzer mittels seines Client-Rechners internetseiten von einem beliebigen Internet-Server herunterladen und auf jede beliebig Größe skaliert mittels seiner Ausgabevorrichtung darstellen.

Besonders das zuerst dargestellte Verfahren, bzw. die zuerst dargestellte Vorrichtung ermöglichen es, daß die Bilder auf den Ausgabeeinheiten der Client-Rechner in beliebiger Größe dargestellt werden können, ohne daß zusätzliche Kapazität im Arbeitsspeicher benötigt wird bzw. zusätzliche Rechenleistung der Recheneinheit des Client-Rechners gegenüber der bisherigen Darstellung eines nicht skalierten Bildes beansprucht wird. Insbesondere ist kein Plugin für einen auf dem Client-Rechner installierten Internet-Browser erforderlich.

Das erfindungsgemäBe Verfahren beziehungsweise die erfindungsgemäße Vorrichtung eignen sich aber auch dafür, ein aus Pixeln aufgebautes Bild, dessen Ausgangsbilddaten in einem Speichermedium einer einzigen Computervorrichtung, insbesondere eines Personal-Computers, abgelegt. sind, als Zielbild in einer beliebigen Größe vollständig auf der Ausgabevorrichtung des Computers darzustellen. Beispielsweise sei als Ausgangsbild ein beliebiges digitales Dokument, das auf dem Computer oder einem angeschlossenen Speichermedium, beispielsweise einer CD, abgelegt ist, genannt, das mittels eines Browsers auf dem Desktop des Computers dargestellt werden soll. Durch Verändern der Größe des Fensterrahmens des Browsers können neue Dimensionsdaten vorgegeben werden, die Ausgangsbilddaten werden anschließend entsprechend des erfindungsgemäßen Verfahrens beziehungsweise mittels des Skalierungsmechanismus der erfindungsgemäßen Vorrichtung verarbeitet und als Zielbilddaten in einem Speichermedium abgelegt, und ein Zielbild entsprechend dieser Zielbilddaten wird auf der Ausgabevorrichtung dargestellt. Das Verändern der Größe des Fensterrahmens kann insbesondere mittels einer am Computer angeschlossen Maus und/oder einer Tastenkombination beziehungsweise eines Tastendruckes einer Taste einer am Computer angeschlossenen Tastatur erfolgen. Es sind aber auch andere grafische Eingabevorrichtungen geeignet, beispielsweise sei ein Trackball, ein Lightpen oder ein grafisches Tablett genannt. Zusätzlich oder alternativ kann Hardware und/oder Software für das Erfassen von Sprachbefehlen vorgesehen werden, um eine Sprachsteuerung zu ermöglichen.

Nachfolgend werden Ausführungsbeispiele der erfindungsgemäßen Vorrichtung bzw. des erfindungsgemäßen Verfahrens dargestellt, und mittels der Figuren näher beschrieben.

Es zeigen:

Figur 1     eine Ausführung des erfindungsgemäßen Verfahrens;

Figur 2     eine Ausführung der erfindungsgemäßen Vorrichtung;

Figur 3     einen Ablaufplan einer besonderen Ausführung des erfindungsgemäßen Verfahrens mit Internet-Server-seitiger Skalierung;

Figur 4     eine Ausführung des erfindungsgemäßen Verfahrens, bei der die Skalierung Internet-Server-seitig oder Client-Rechner-seitig erfolgen kann;

Figur 5     ein Beispiel einer Internetseite, die mittels HTML erstellt ist und mit dem erfindungsgemäßen Verfahren beziehungsweise mit der erfindungsgemäßen Vorrichtung skaliert werden kann;

Figur 6     eine JavaScript-Quelldatei, welche in die HTML-Datei der darzustellenden Internetseite mit aufgenommen werden kann, zur regelmäßigen Überwachung der aktuell vorgegebenen Ausgabedimension des Zielbildes;

Figur 7     ein Ausführungsbeispiel eines erfindungsgemäßen Skalierungsmechanismus;

Figur 8     das durch den Skalierungsmechanismus ausgeführte Verfahren;

Figur 9     das Verfahren bei einer Größenänderung des Browserfensters eines Browsers mit integrierter Erkennung der Größenänderung;

Figur 10     das Verfahren bei einer Größenänderung des Browserfensters eines Browsers ohne integrierte Größenänderungserkennung.

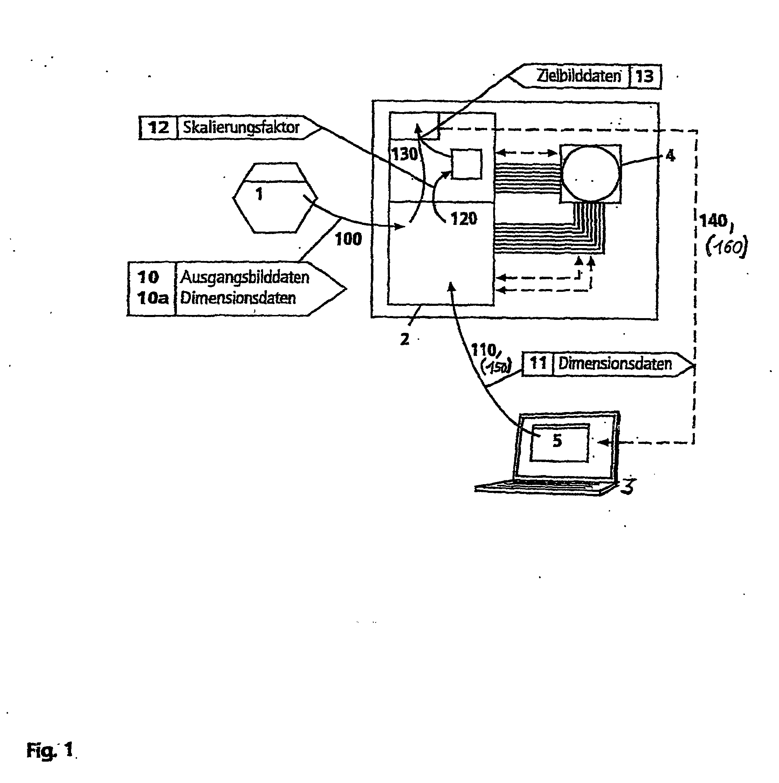

Figur 1 zeigt ein erfindungsgemäßes Verfahren zum Darstellen eines aus Pixeln aufgebauten Bildes 5 auf einer pixelorientierten Ausgabevorrichtung 3. Das Bild 5 ist die grafische Umsetzung eines digitalen Dokumentes (Ausgangsbild) mit Ausgangsbilddaten 10, die Dimensionsdaten 10a umfassen, welche für die Darstellung des digitalen Dokumentes in einer vorbestimmten Größe als Zielbild auf der Ausgabevorrichtung 3 verantwortlich sind. Die Ausgangsbilddaten 10 mit den Dimensionsdaten 10a werden im Schritt 100 aus einem digitalen Speichermedium 1 in einen Arbeitsspeicher 2 eingelesen. In einem Schritt 110 werden die Dimensionsdaten 11 des gewünschten Ausgabeformates aus einem digitalen Speichermedium (das nicht explizit dargestellt ist) in den selben Arbeitsspeicher 2 eingelesen. Mittels der Recheneinheit 4, die mit dem Arbeitsspeicher 2 verschaltet ist, werden die Dimensionsdaten 10a des Ausgangsbildes und die Dimensionsdaten 11 des Zielbildes verarbeitet, und in Abhängigkeit dieser Dimensionsdaten 10a, 11 wird ein Skalierungsfaktor 12 erzeugt (Schritt 120). Weiterhin werden mittels der Recheneinheit 4 die Ausgangsbilddaten 10, d.h alle skalierbare Größen in den Ausgangsbilddaten 10, mit dem Skalierungsfaktor 12 multipliziert und als Zielbilddaten 13 im Arbeitsspeicher 2 gespeichert (Schritt 130). Schließlich werden die Zielbilddaten 13 an die Ausgabevorrichtung 3 übermittelt, und das Zielbild wird entsprechend der Zielbilddaten 13 auf der Ausgabevorrichtung 3 dargestellt (Schritt 140). Es ist auch möglich, die Zielbilddaten 13 vorher in einem weiteren Speichermedium, z. B. dem Arbeitsspeicher eines Client-Rechners zwischenzuspeichem.

In vorgegebenen Zeitintervallen werden die Dimensionsdaten 11 des gwünschten Ausgabeformates des Zielbildes überprüft und bei geänderten Dimensionsdaten 11 die dargestellten Schritte 120 bis 140 wiederholt

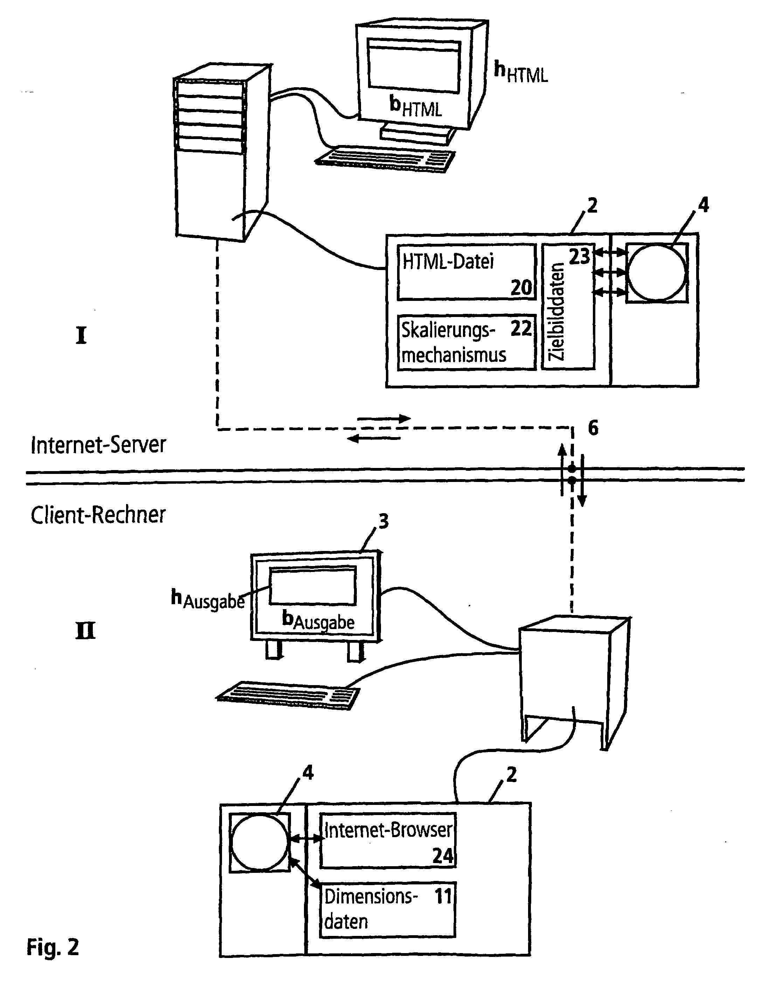

Figur 2 zeigt eine Ausführung einer erfindungsgemäßen Vorrichtung. Man erkennt einen Internet-Server I und einen Client-Rechner II. Sowohl Internet-Server I als auch Client-Rechner II umfassen eine Recheneinheit 4, die mit einem Arbeitsspeicher 2 verschaltet ist. Der Client-Rechner II umfaßt eine Ausgabevorrichtung, mittels der eine Internetseite, die im Arbeitsspeicher des Internet-Servers I als HTML-Datei mit den Ausgangsbilddaten 10 abgelegt ist, in einer beliebigen Größe vollständig dargestellt werden soll. Die HTML-Datei umfaßt die Dimensionsdaten 10a des Ausgangsbildes, d.h Größenangaben, um die HTML-Datei als Zielbild in einer zugehörigen Größe darzustellen. Im Arbeitsspeicher 2 des Client-Rechners sind die Dimensionsdaten 11 des gewünschten Ausgabeformates des Zielbildes abgelegt. Mittels einer Intemetverbindung 6 tauschen der internet-Server I und der Client-Rechner II Daten aus. Diese Verbindung 6 kann eine beliebige Kommunikationsverbindung bzw. ein beliebiger Kommunikationsmechanismus sein. Die zur Datenübertragung verwendeten Protokolle können als Standardprotokoll ausgebildet sein oder auch eine spezielle Form umfassen. Selbstverständlich ist es möglich, daß Internet-Server I und/oder Client-Rechner II zusätzlich mit einem oder mehreren lokalen Netzwerken (Local Area Network LAN) verschaltet sind oder mit anderen Computern verschaltet sind.

Im Arbeitsspeicher 2 des Internet-Servers I ist ein Skalierungsrmechanismus 22 abgelegt. Der Skalierungsmechanismus 22 ist derart abgelegt, daß er durch die Recheneinheit 4 ausgeführt werden kann, und zwar so, daß er die Ausgangsbitddaten 10 der HTML-Datei empfangen, diese entsprechend der Dimensionsdaten 11 des Zielbildes skalieren und als Zielbilddaten 13 im Arbeitsspeicher 2 des Internet-Servers ablegen kann. Internet-Server I und Client Rechner II sind derart mittels der Internetverbindung 6 verschaltet, daß die Zielbilddaten 13 aus dem Arbeitsspeicher 2 des Internet-Servers I an den Client-Rechner II übermittelt werden können, und daß die Ausgabevorrichtung 3 des Client-Rechners II entsprechend dieser Zielbilddaten 13 ein aus Pixeln aufgebautes Bild darstellt.

Die Darstellung des Bildes entsprechend der Zielbilddaten 13 erfolgt vorzugsweise mittels eines Internet-Browsers 24, der ausführbar durch die Recheneinheit 4 im Arbeitsspeicher 2 des Client-Rechners abgelegt ist Vorzugsweise umfassen die Dimensionsdaten 11 des Zielbildes eine Ausgabehöhe $h_{Ausgabe}$ und eine Ausgabebreite $b_{Ausgabe}$ und die Dimensionsdaten 10a des durch die HTML-Datei beschriebenen Ausgangsbildes eine Ausgangsbildbreite $b_{HTML}$ und eine Ausgangsbildhöhe $h_{HTML}$.

Die in diesem Ausführungsbeispiel dargestellte Darstellungsvorrichtung bzw. Ausgabevorrichtung 3 des Client-Rechners umfaßt ein LCD-Display, es sind jedoch auch andere Ausgabevorrichtungen denkbar, die pixelorientiert darstellen. Auch der Internet-Server I umfaßt vorteilhaft eine Ausgabevorrichtung, mittels der das Ausgangsbild dargestellt werden kann.

Es ist selbstverständlich möglich, daß die Ausgangsbilddaten 10, Zielbilddaten 13 und/oder der Skalierungsmechanismus 22 zusätzlich oder alternativ in einem anderen Speichermedium als dem Arbeitsspeicher 2 abgelegt sind. Denkbar sind sowohl beliebige nur lesbare Speichermedien (für die Ausgangsbilddaten und den Skalierungsmechanismus) als auch alle les- und (wieder)beschreibbare Speichermedien (für Ausgangs- und Zielbilddaten, Skalierungsmechanismus). Beispielsweise seien nur Festplatten, CD, DVD und Speicherchips genannt.

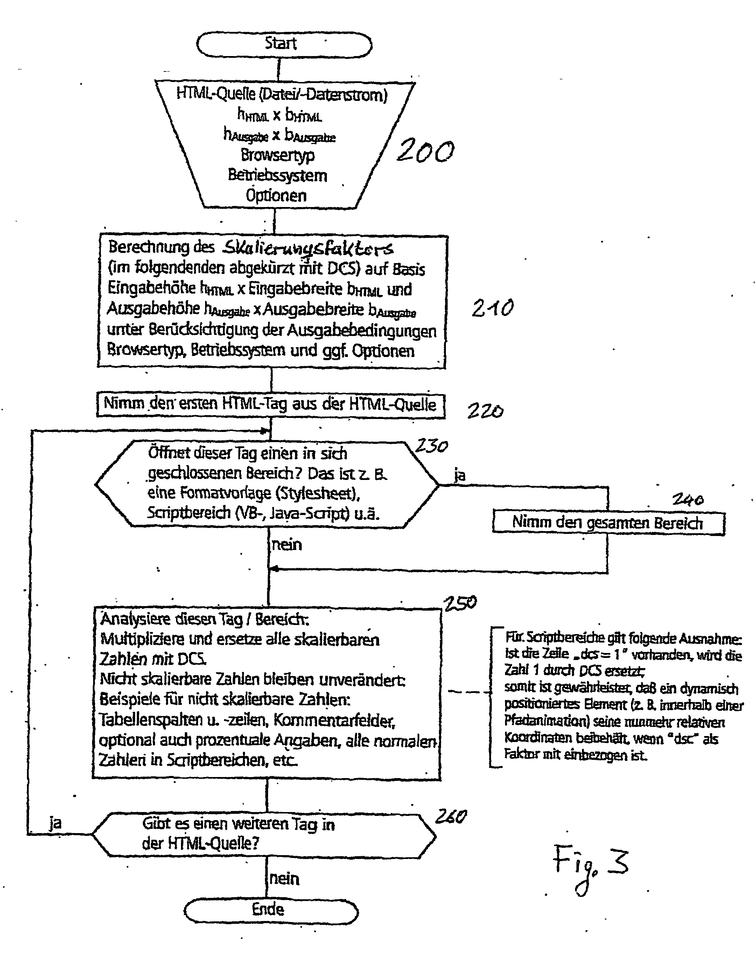

Figur 3 zeigt ein Ablaufplan eines erfindungsgemäßen Verfahrens. Zuerst werden die Ausgangsbitddaten, umfassend eine HTML-Quelle, die Dimension des Ausgangsbildes $h_{HTML}$ x $b_{HTML}$, die Zielbilddaten, umfassend die Dimension des Zielbildes $h_{Ausgabe}$ x $b_{Ausgabe}$, den Browser-Typ, mittels der das Bild auf der Ausgabevorrichtung dargestellt werden soll, das Betriebssystem, das insbesondere auf dem Client-Rechner installiert ist, und insbesondere weitere Optionen bezüglich der gewünschten Ausgabe in einen Arbeitsspeicher eingelesen (Schritt 200).

Danach wird ein Skalierungsfaktor (DCS) berechnet, auf Basis der Eingabehöhe $h_{HTML}$ x Eingabebreite $b_{HTML}$ und Ausgabehöhe $h_{Ausgabe}$ x Ausgabebreite $b_{Ausgabe}$ unter Berücksichtigung der Ausgabebedingungen, insbesondere Browser-Typ, Betriebssystem und gegebenenfalls Optionen (Schritt 210).

Anschließend wird der erste HTML-Tag aus der HTML-Quelle gelesen (Schritt 220) und geprüft, ob dieser Tag einen Datenblock mit einem in sich geschlossenen Bereich umfaßt, bzw, ob sich in diesem Tag ein geschlossener Bereich öffnet, z. B. eine Formatvorlage (Stylesheet), ein Scriptbereich (VB-, Java-Script oder ähnliches) (Schritt 230).

Öffnet sich in dem gelesenen Tag ein geschlossener Bereich, so wird der gesamte Bereich in den Arbeitsspeicher eingelesen (Schritt 240). Öffnet sich kein geschlossener Bereich in dem gelesenen Tag, so wird Schritt 240 übersprungen und es erfolgt direkt Schritt 250, in welchem der gelesene Tag bzw. der gelesene gesamte Bereich analysiert wird und alle skalierbaren Zahlen mit dem Skalierungsfaktor multipliziert und durch das Ergebnis ersetzt werden. Die nicht skalierbaren Zahlen bzw. Größen bleiben unverändert, als Beispiel seien Tabellenspalten und -zeilen, Kommentarfelder, optional auch prozentuale Angaben, alle normalen Zahlen im Scriptbereich, das heißt z. B. Zahlen, die in einem Textfeld dargestellt werden, genannt

Danach wird in Schritt 260 geprüft, ob die HTML-Quelle einen weiteren, noch nicht gelesenen Tag umfaßt und wenn ja, werden die Schritte 230 bis 260 wiederholt.

Insbesondere umfaßt der Schritt 250 eine Ausnahme, um zu gewährleisten, daß auch ein dynamisch positioniertes Element innerhalb der HTML-Quelle in einer relativ zum Zielbild korrekten Dimension dargestellt wird. Diese Ausnahme kann zum Beispiel dadurch aktiviert beziehungsweise gekennzeichnet werden, daß der Skalierungsfaktor im Scriptbereich der Internetseite auf 1 gesetzt wird (DCS=1).

Das in Figur 3 dargestellte Verfahren eignet sich insbesondere für eine serverseitige Skalierung, das heißt die Datenverarbeitung, umfassend die Berechnung des Skalierungsfaktors, das Erzeugen der Zielbilddaten, erfolgt mittels einer Recheneinheit des Internet-Servers und die Daten werden im Arbeitsspeicher des Internet-Servers abgelegt. Dabei ist es sowohl möglich, daß in einem Schritt die Dimensionsdaten des Zielbildes mittels der Recheneinheit des Internet-Servers vom Client-Rechner abgefragt werden, das heißt mittels der Recheneinheit des Client-Rechners wird über die Intemetverbindung eine Antwort umfassend die Dimensionsdaten des Zielbildes an den Internet-Server übermittelt. In einer besonders vorteilhaften Ausführung kann dieser Schritt jedoch entfalten, nämlich dann, wenn die Recheneinheit des Client-Rechners insbesonders mittels eines auf dem Client-Rechner installierten Internet-Browsers, schon direkt beim Zugriff auf die auf dem Internet-Server gespeicherte Internetseite die Dimensionsdaten des Zielbildes an den Internet-Server übermittelt

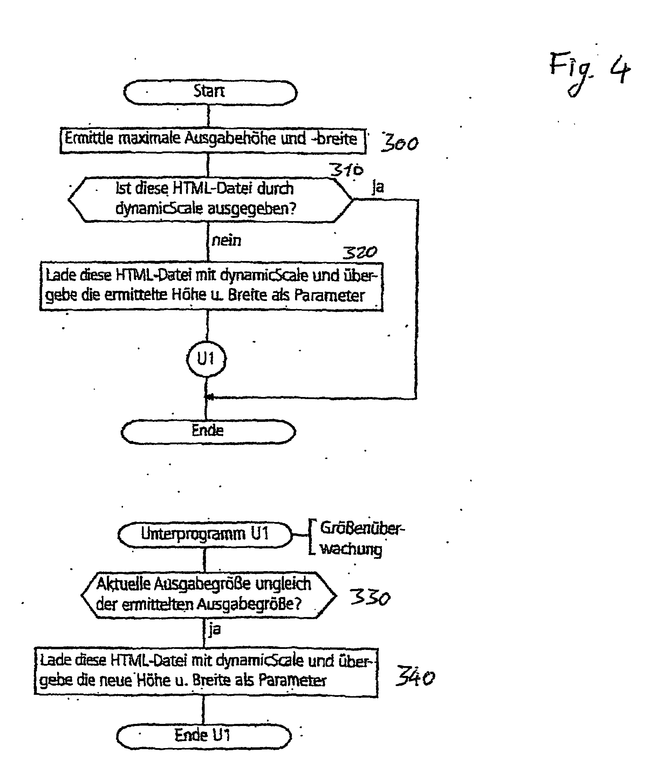

Figur 4 zeigt ein erfindungsgemäßes Verfahren, das sich insbesondere auch zur clientseitigen Skalierung eignet, das heißt bei dem die Verarbeitungsschritte für die skalierte Darstellung des Zielbildes mittels der Recheneinheit des Client-Rechners erfolgen können. Zuerst wird die Ausgabehöhe und/oder Ausgabebreite einer von einem Internet-Server gelesenen Internetseite ermittelt (Schritt 300). Danach wird geprüft, ob diese Internetseite (insbesondere im Format einer HTML-Datei) bereits mittels des Internet-Servers mittels eines erfindungsgemäßen Verfahrens auf die gewünschte Zielbildgröße skaliert wurde (Schritt 310), d. h. es wird geprüft, ob diese diese Internetseite durch einen erfindungsgemäßen Skalierungsmechanismus (dynamicScale) gesendet wurde. Ist dies der Fall, so braucht client-seitig keine Skalierung mehr stattzufinden, das Verfahren ist bereits beendet Ist dies nicht der Fall, so erfolgt Schritt 320, in dem die Internet-Seite, insbesondere HTML-Datei mittels des erfindungsgemäßen Verfahrens skaliert wird, insbesonders durch die Ausführung der Schritte 200 bis 260 aus Figur 3. Diese Skalierung kann mittels der Recheneinheit des Client-Rechners erfolgen, selbstverständlich ist aber auch eine Skalierung mittels der Recheneinheit des Internet-Servers möglich.

Besonders vorteilhaft wird anschließend überprüft, ob sich die gewünschte Ausgabedimension des Zielbildes bereits wieder geändert hat, das heißt ob die aktuelle Ausgabegröße ungleich der ermittelten Ausgabegröße ist (Schritt 330). Hat sich die gewünschte Ausgabegröße bereits wieder geändert, so werden die neue Höhe und Breite als Parameter ermittelt und das erfindungsgemäße Verfahren wiederum erneut angewendet, insbesondere durch Abarbeitung der Schritte 200 bis 260 aus Figur 3 (Schritt 340).

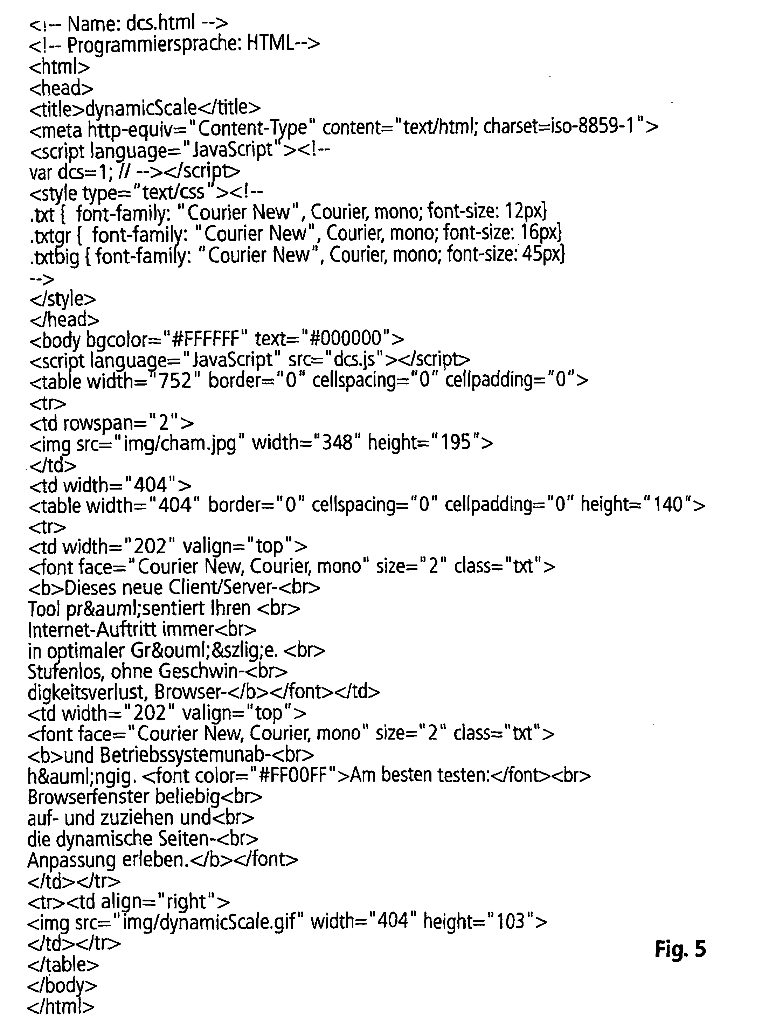

Figur 5 zeigt ein Beispiel einer Internetseite, die mittels HTML erstellt ist und mit dem erfindungsgemäßen Verfahren beziehungsweise mit der erfindungsgemäßen Vorrichtung skaliert werden kann. Wie man sieht, sind verschiedene Bildelemente und Textelemente in der Internetseite eingebunden. Diese Internetseite kann in einem Speichermedium eines Internet-Servers abgelegt werden und mittels einer Verbindung über das Internet von einem beliebigen Client-Rechner abgerufen und mittels einer Ausgabevorrichtung dargestellt werden. Die in Figur 5 beschriebene Internetseite weist eine feste Bildgröße auf, die sich aus den aus Figur 5 entnehmbaren Größenparametern ergibt Beispielsweise sei auf die 27. Zeile verwiesen, in der ein Bildelement (src="img/cham.jpg") mit einer festen Breite von 348 Pixeln (width="348") und einer Höhe von 195-Pixeln (height="195") in der Internetseite eingebunden ist. Die durch die einzelnen Elemente festgelegte Größe des Ausgangsbildes kann mittels der Erfindung in jeder beliebige Größe entsprechend des gewünschten Formates der Ausgabevorrichtung beziehungsweise entsprechend der Dimensionsdaten des Zielbildes vollständig und dem Ausgangsbild maßstabsgetreu dargestellt werden.

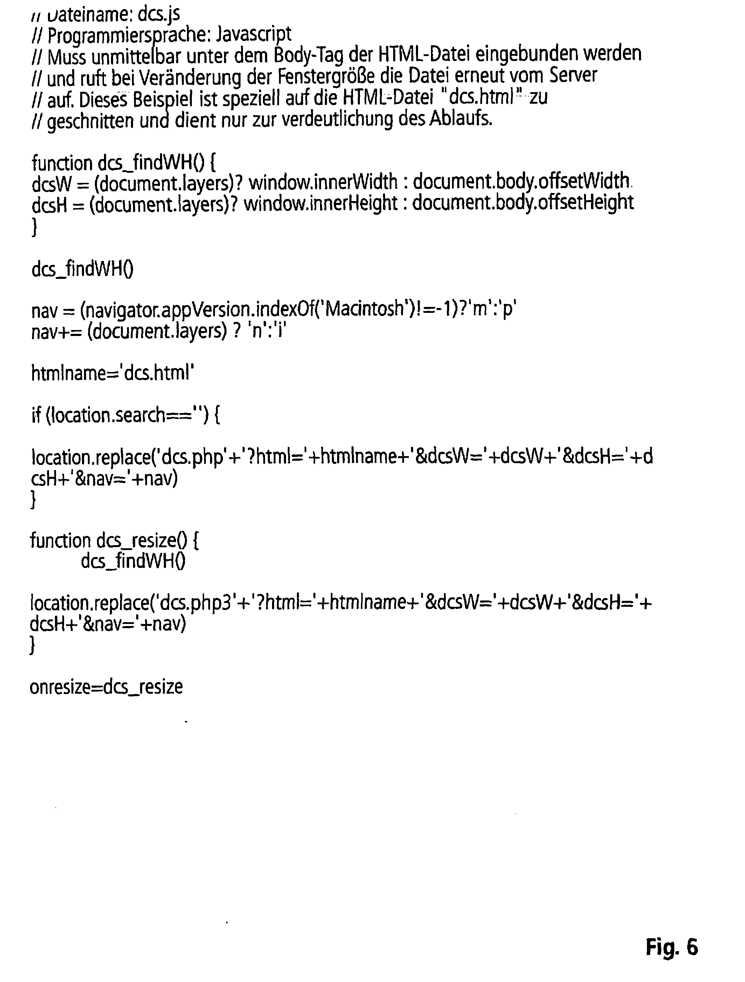

Figur 6 zeigt eine JavaScript-Quelldatei, welche in die HTML-Datei der darzustellenden Internetseite mit aufgenommen werden kann, insbesondere kann diese direkt unter dem Body-Tag der HTML-Datei eingebunden werden. Die dargestellte JavaScript-Quelldatei ist ein Beispiel für die Ausführung eines vorteilhaften erfindungsgemäßen Verfahrensschrittes zur Überwachung beziehungsweise Überprüfung in einem vorgegebenen zeitlichen Intervall, ob sich die gewünschte Ausgabedimension des Zielbildes geändert hat (entsprechend des in Figur 4 beschriebenen Schrittes 330).

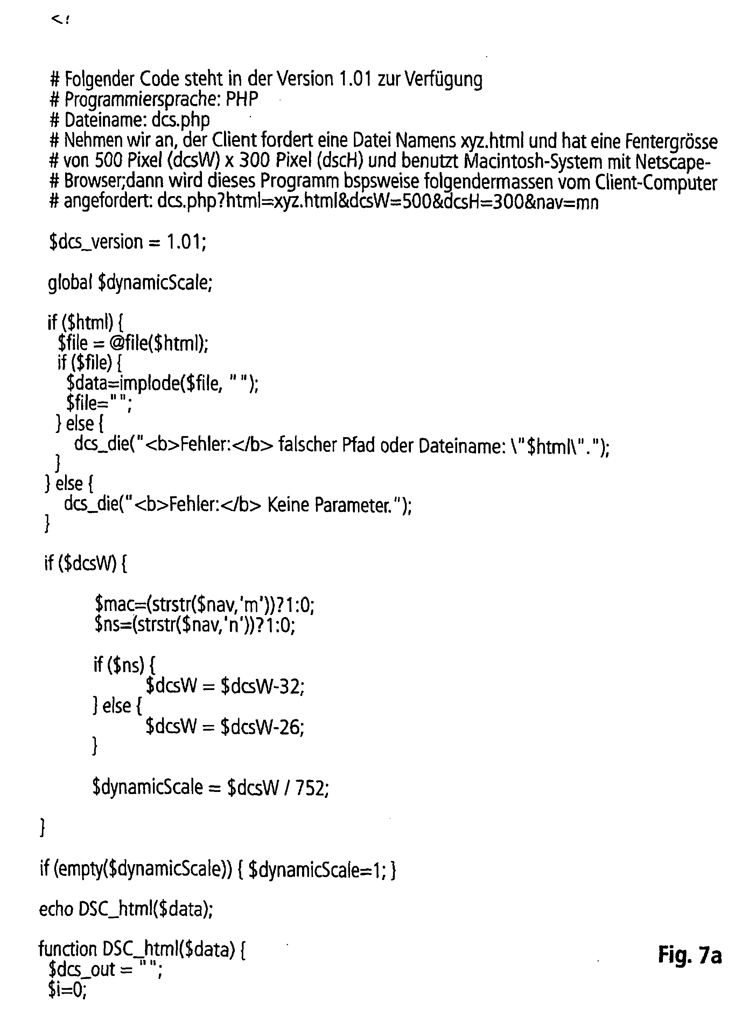

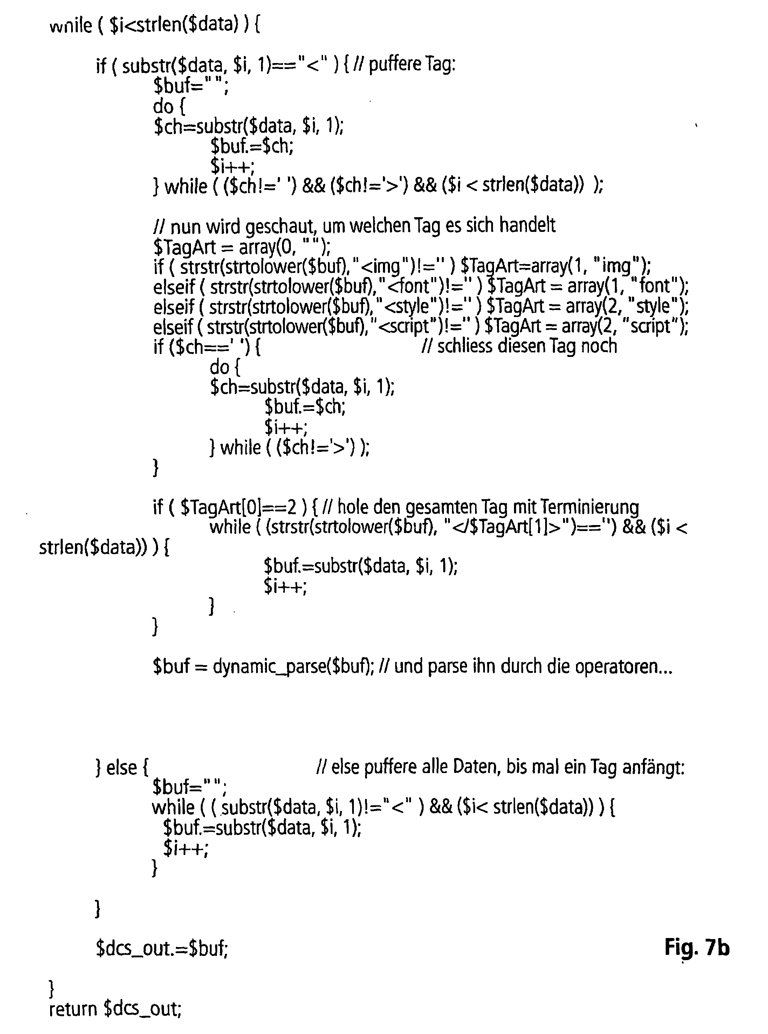

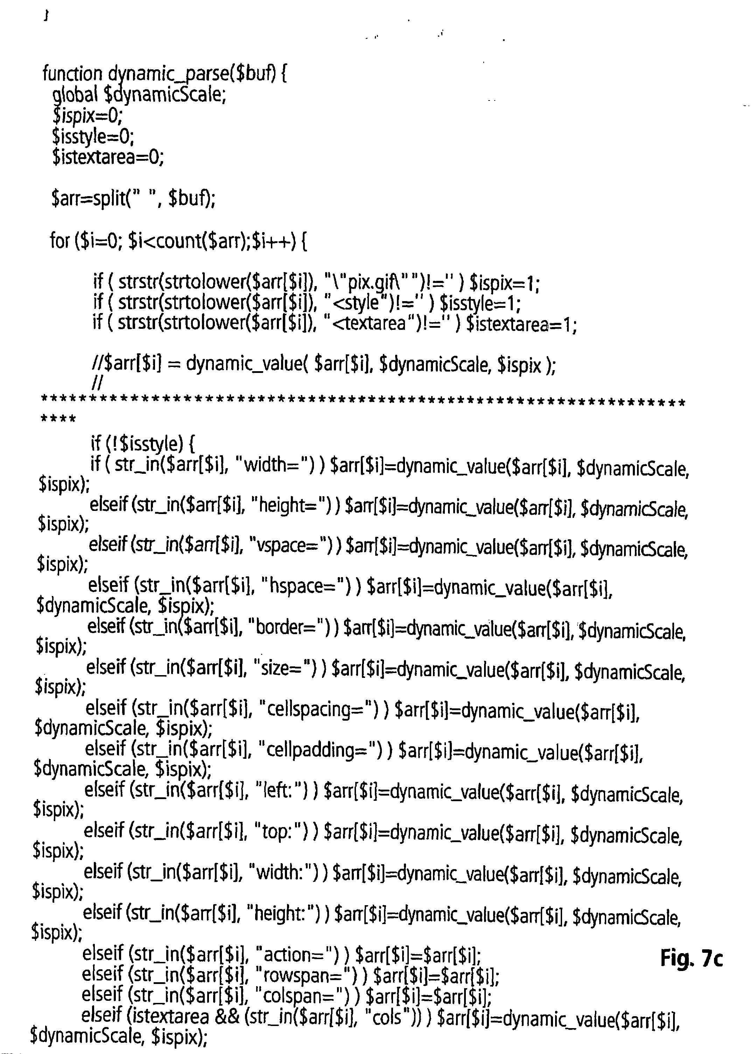

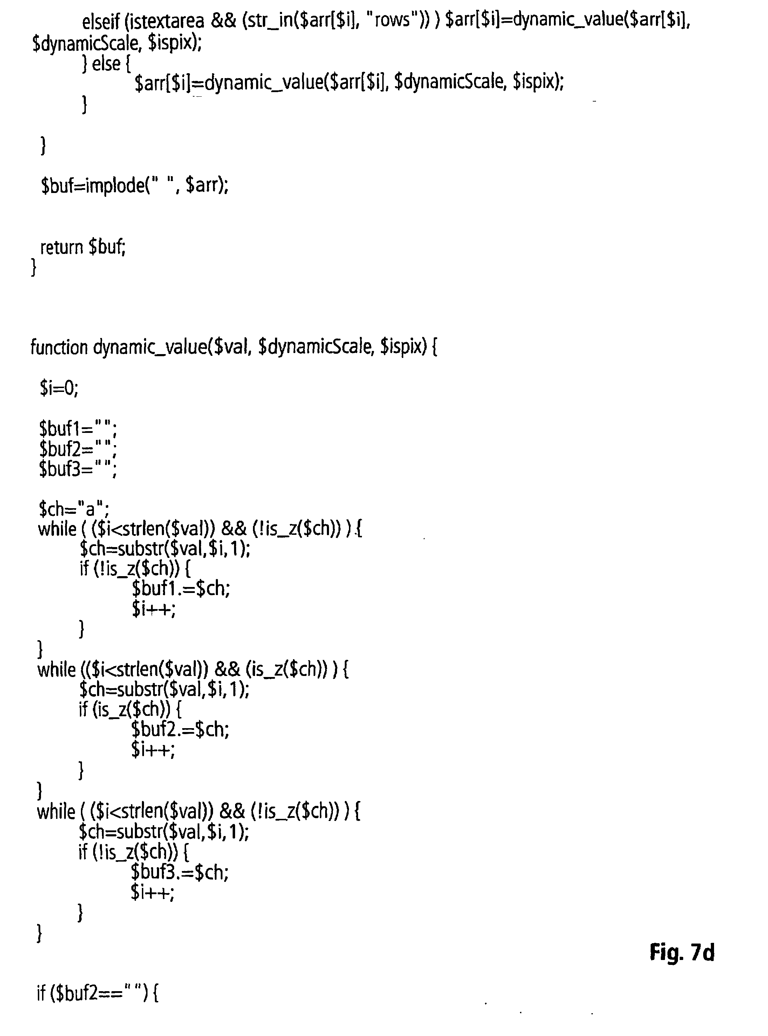

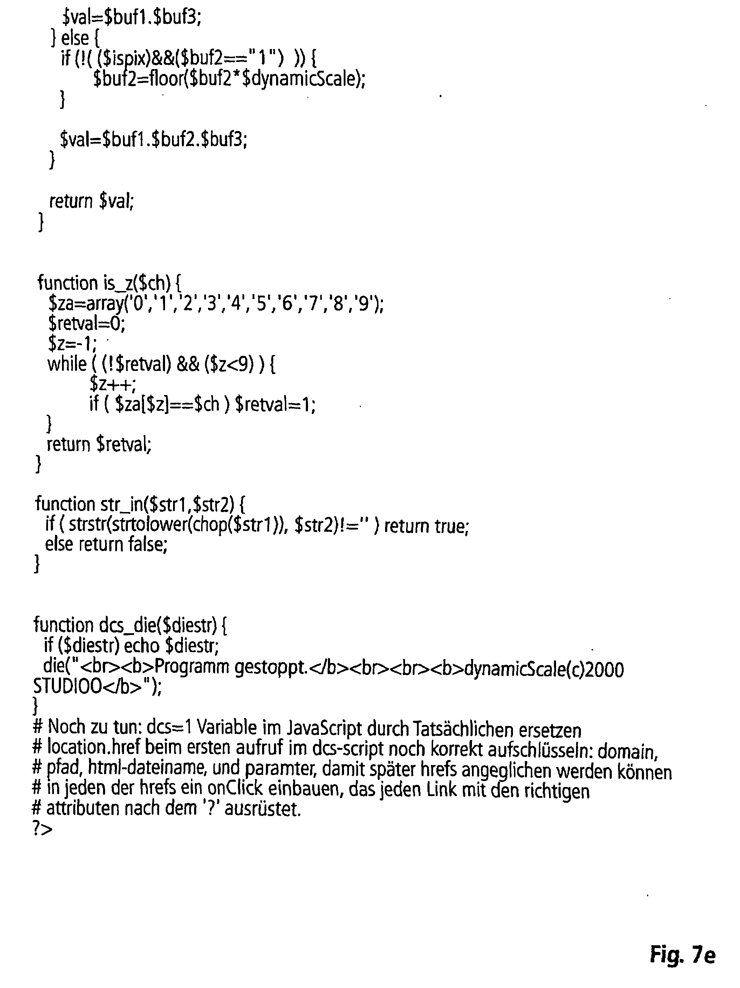

Figur 7 zeigt ein Ausführungsbeispiel eines erfindungsgemäßen Skalierungsmechanismus. Dieser Skalierungsmechanismus kann ausführbar durch eine Recheneinheit (CPU) insbesondere im Arbeitsspeicher (RAM) einer Vorrichtung zum Darstellen eines aus Pixeln aufgebauten Bildes, insbesondere einer Internetseite, abgelegt werden. Der in Figur 7 beschriebene Skalierungsmechanismus kann - ausgeführt durch die Recheneinheit - die Daten einer Ausgangsbildes, insbesondere, wie in Figur 7 beschrieben, die Tags einer in HTML abgelegten Internetseite empfangen, diese entsprechend des erfindungsgemäßen Verfahrens skalieren und als Zielbilddaten insbesondere im Arbeitsspeicher ablegen. Mittels einer Darstellungsvorrichtung können dann die Zielbilddaten visualisiert werden.

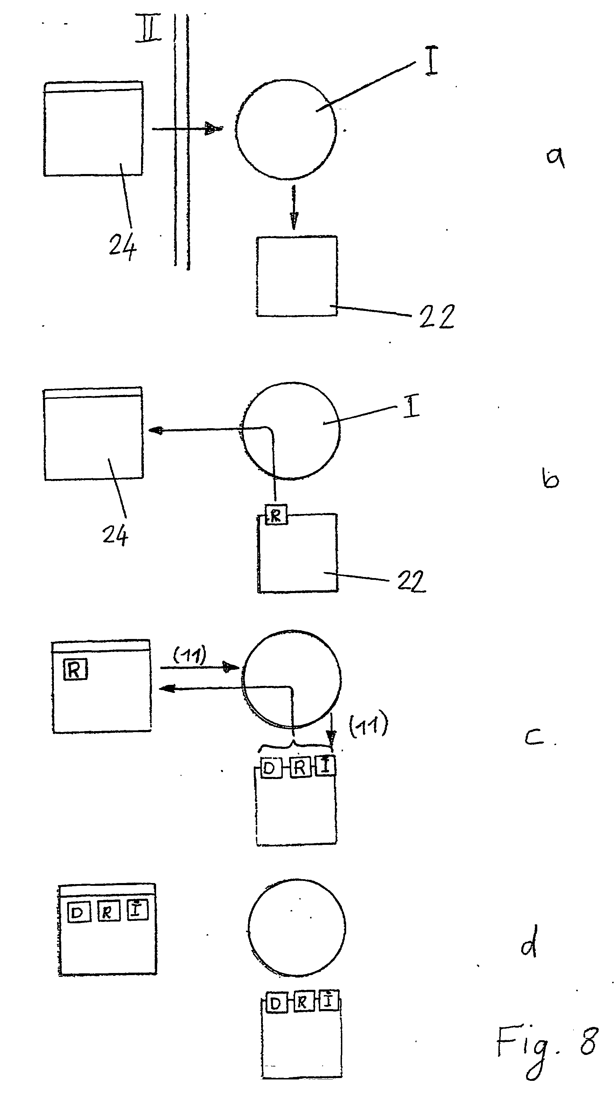

Figur 8 zeigt noch einmal in einem Ausführungsbeispie), wie der erfindungsgemäße Skalierungsmechanismus 22 arbeitet. In Fig. 8a ist ein Zustand dargestellt, in welchem ein Browser 24, der auf einem Client-Rechner II ausgeführt wird, eine Anforderung für ein digitales Dokument an einen Server I sendet. Der Server I sendet die angeforderten Daten, d.h. das angeforderte digitale Dokument durch den Skalierungsmechanismus 22. Der Skalierungsmechanismus 22 überprüft die vom Server I gesendeten Daten (Figur 8b) und erkennt, daß keine Dimensionsdaten des gewünschten Ausgabeformates vorliegen. Daraufhin sendet der Skalierungsmechanismus 22 das Skript R an den Browser 24, um die Dimensionsdaten des gewünschten Ausgabeformates zu ermitteln.

Das Skript R wird durch den Browser 24 bzw, durch den Client-Rechner II, auf dem der Browser 24 abläuft, ausgeführt und verursacht, daß das digitale Dokument nochmals vom Server I angefordert wird (Figur 8c). Diesmal enthält die Anforderung die Dimensionsdaten 11 des gewünschten Ausgabeformates. Der Skalierungsmechanismus 22 erkennt die Dimensionsdaten 11 und skaliert das digitale Dokument entsprechend um. Jetzt wird das modifizierte digitale Dokument D zusammen mit dem Skript R und einem weiteren Skript i, dessen Funktion später näher erläutert wird, an den Browser 24 gesendet, und der Browser 24 zeigt das Dokument D in einem Browserfenster mit den vormals übermittelten Dimensionsdaten 11 an.

Jedes weitere angeforderte Dokument wird wie in Figur 8c dargestellt angefordert, denn die Dimensionsdaten 11 sind nun, da das Skript R in den Browser ausführbar eingebunden wurde, bekannt (Figur 8d).

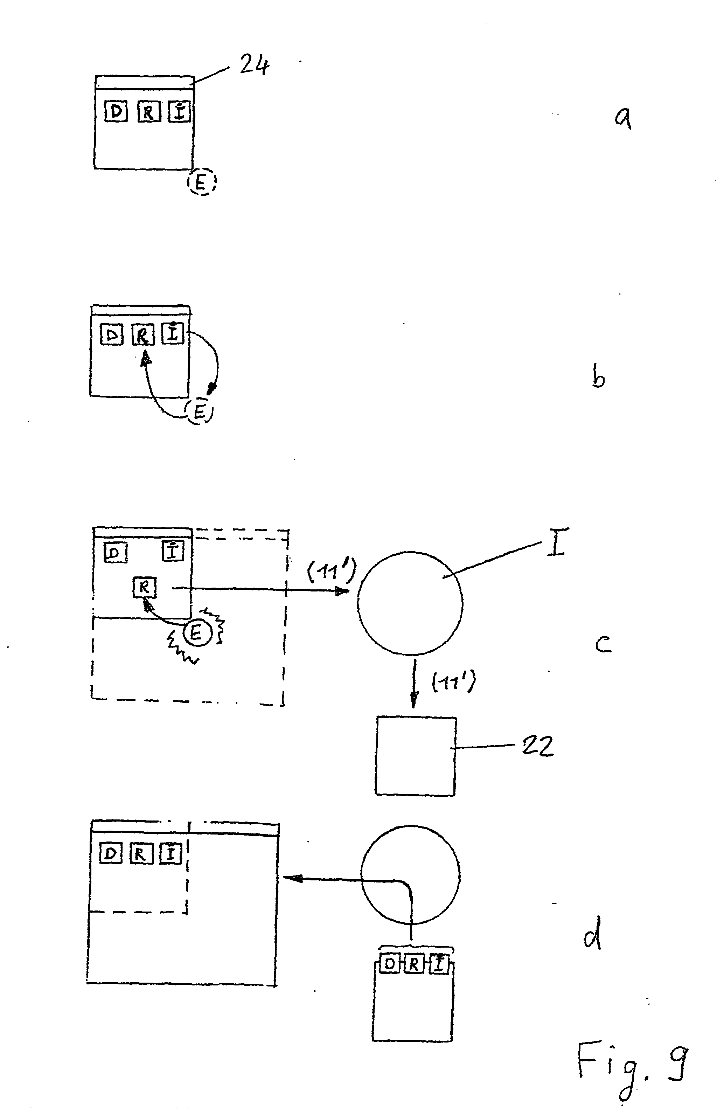

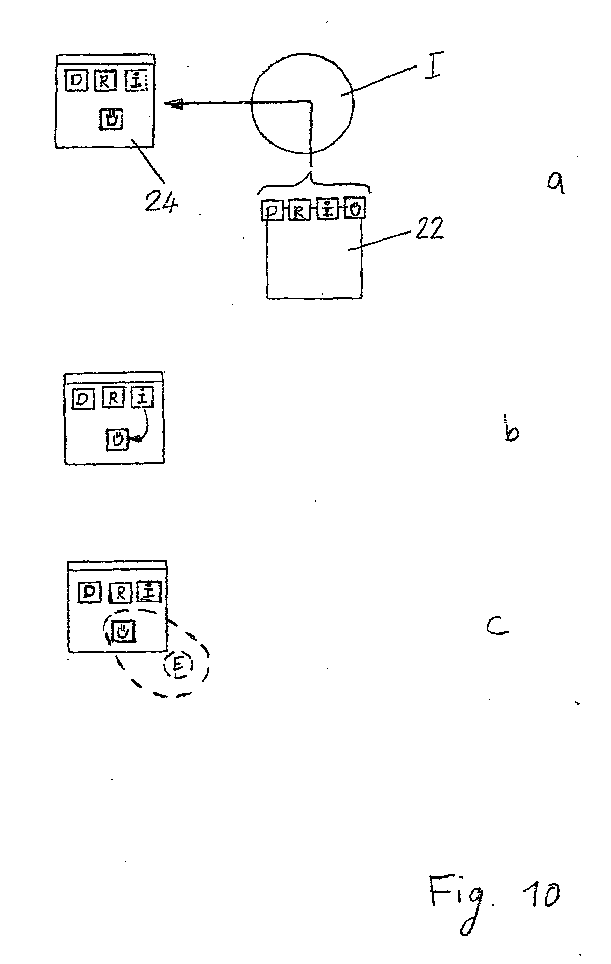

Nachfolgend soll eine vorteilhafte Funktionsweise des erfindungsgemäßen Verfahrens bei einer Größenänderung des Browserfensters dargestellt werden. Dabei ist zwischen zwei Fällen zu unterscheiden, nämlich, ob der Browser 24 über eine interne Funktion verfügt, die eine Größenänderung des Browserfensters selbständig erkennt (Figur 9) oder ob der Browser 24 nicht über eine solche Funktion verfügt (Figur 10).

Der in Figur 9 dargestellte Browser 24 verfügt über eine Funktion, die ständig die Größe des Browserfesters überwacht, eine Größenänderung des Fensters erkennt und bei einer Größenänderung automatisch ein Ereignis E auslöst. Der Skalierungsmechanismus 22 veranlaßt durch das mit dem Dokument gesendete Skript i, daß das Dokument - sobald es vollständig aufgebaut ist - eine Initialisierungsroutine startet (Skript i), d.h. daß das Skript i durch den Browser 24 ausgeführt und in dem Browser 24 ablaufend eingebunden wird (Figur 9a).

Das Skript i veranlaßt wiederum, daß das Ereignis E bei seiner Aktivierung das Skript R aufruft (Figur 9b). Man kann also sagen, daß das Ereignis E so "umgebogen" worden ist, daß bei einer Dimensionsänderung des Browserfensters sofort das digitale Dokument mit einer Anforderung, die die neuen Dimensionsdaten 11' umfaßt, erneut angefordert wird (Figur 9c). Ein durch den Skalierungsmechanismus 22 entsprechend neu skaliertes digitales Dokument wird vom Server I anschließend an den Client-Rechner II gesendet und mittels des Browsers in der neuen Dimension dargestellt (Figur 9d).

In Figur 10 ist der Fall dargestellt, in dem der Browser nicht über eine interne Funktion verfügt, die die Größenänderung des Browserfensters erkennt. In diesem Fall übermittelt der Skalierungsmechanismus 22 zusammen mit dem digitalen Dokument D nicht nur die Skripte R, i, sondern auch ein weiteres Überwachungsskript Ü an den auf dem Client-Rechner II ablaufenden Browser 24 (Figur 10a). Bei der Initialisierung durch Ausführung des Skriptes i wird dieses Überwachungsskript Ü aktiviert (Figur 10b). Das ablaufende Überwachungsskript Ü simuliert nun das Ereignis E, und es kann, wie in Figur 9 dargestellt, fortgefahren werden.

Insbesondere aus dem vorstehend beschriebenen Verfahrensablauf wird deutlich, daß die Erfindung es mit besonders einfachen Mitteln ermöglicht, daß ein digitales Dokument dynamisch und in seiner Größe durch einen Benutzer jederzeit änderbar auf dem Desktop eines Computers dargestellt wird. Die Erfindung macht sich dabei die Eigenschaften von marktgängigen Programmen zunutze, um mit geringem Programmieraufwand und geringem Speicherkapazitätsverbrauch eine wirkungsvolle Dynamik bei der Darstellung zu erreichen. So beinhalten viele marktgängige Browser ein sogenanntes Dokument-Objekt Modell (DOM). Das DOM kann auf unterschiedliche Arten ausgebaut sein und beinhaltet Eigenschaften und Funktionen, die über Skript-Sprachen oder Programme, welche die Funktionalität des Browsers erweitern, ausgelesen oder aufgerufen werden können.

Diese Eigenschaften werden durch den erfindungsgemäßen Skalierungsmechanismus ausgenutzt, indem besonders vorteilhaft die Breiten- und Höheninformationen des aktuellen Anzeigebereiches ausgelesen werden, um die Dimensionsdaten des gewünschten Ausgabeformates feststellen zu können. Sofern diese vorhanden ist, verwendet der erfindungsgemäße Skalierungsmechanismus ebenfalls die "Resize"-Funktion.

Ein Server wartet auf die Anforderung eines Clients, weiche in der Regel durch einen auf dem Client ablaufenden Browser ausgeführt wird, und stellt gemäß dieser Anforderung entsprechende Daten zusammen und sendet diese zum Client. Dies wird erfindungsgemäß dazu ausgenutzt, daß der Skalierungsmechanismus in diesen Sendepfad geschaltet wird, so daß die Daten, bevor sie beim Client ankommen, entsprechend modifiziert werden können. Die Funktionalität des Servers kann ebenfalls durch Skript-Sprachen und/oder Programme erweitert werden, wobei der Skalierungsmechanismus als ein solches Programm oder Skript betrachtet werden kann, die die Funktionalität eines Servers erweitert.

Wie dargestellt, kann der Skalierungsmechanismus auch auf einem Proxyserver ausgeführt werden, wobei dieser Proxyserver durch Software auf einem Internet-Server simuliert werden kann oder auch eine eigenständige physikalische Baueinheit mit entsprechender Hardware sein kann. Bei Einbindung des Skalierungsmechanismus auf einem Server, beispielsweise Internet-Server, könnte der Skalierungsmechanismus selbst ebenso als Server bezeichnet werden.

Nachfolgend sollen noch einmal die wesentlichen Funktionen bzw. Arbeitsschritte einer vorteilhaften Ausführung der verwendeten Skripte beschrieben werden:

Das Skript R ermittelt die Dimensionsdaten des gewünschten Ausgabeformates, ermittelt weiterhin, welches Dokument aktuell angefordert wird und verursacht eine Anforderung dieses Dokumentes, wobei die Anforderung die ermittelten Dimensionsdaten umfaßt.

Das Skript Ü überwacht die Dimensionsdaten des Browserfensters in einem regelmäßigen Zeitintervall, insbesondere ständig, wenn der Browser nicht über eine solche Funktion verfügt. Bei einer Differenz der Dimensionsdaten erfolgt eine Benachrichtigung bzw. das Ereignis E wird simuliert bzw. aktiviert.

Das Skript i dient einer Initialisierungsroutine, die entweder bei entsprechender Funktionalität des Browsers veranlaßt, daß bei Auftreten des Ereignisses E das Skript R aufgerufen wird oder die veranlaßt, daß das Überwachungsskript Ü aktiviert wird, welches ein solches Ereignis E simuliert.

Ein Ausführungsbeispiel für das beanspruchte Computersystem besteht, wie in Figur 2 gezeigt, in einer besonders einfachen Ausführung aus einem Internet-Server I un einem Client-Rechner II, die über eine Internetverbindung 6 miteinander verbunden sind.

Das beanspruchte Server-System kann, wie in Figur 2 dargestellt, beispielsweise als Internet-Server I ausgebildet sein und das Client-System als einfacher Client-Rechner II.

Als Beispiel für ein digitales Speichermedium seien ein RAM-Baustein, ein ROM-Baustein, optische, magnetische oder magneto-optische Datenträger genannt (CD, DVD, etc.) sowie allgemein statische, dynamische, flüchtige oder nicht flüchtige Speichervorrichtungen.

## Bezugszeichenliste

| | |
|---|---|
| 1 | Speichermedium |
| 2 | Arbeitsspeicher |
| 3 | Ausgabevorrichtung |
| 4 | Recheneinheit |
| 5 | Bild |
| 6 | Internetverbindung |
| 10 | Ausgangsbilddaten |
| 10a | Dimensionsdaten des digitalen Dokumentes |
| 11 | Dimensionsdaten des gewünschten Ausgabeformates |
| 12 | Skalierungsfaktor |
| 13 | Zielbilddaten |
| 22 | Skalierungsmechanismus |
| 24 | Browser |
| I | Internet-Server |
| II | Client-Rechner |
| D | Dokument |
| R | Skript |
| i | Skript |
| Ü | Überwachungsskript |

## Patentansprüche

**1.** Verfahren zur größenangepaßten Darstellung eines digitalen Dokumentes auf einer pixelorientierten Ausgabevorrichtung (3), umfassend die folgenden Schritte:

1.1 die in einem digitalen Speichermedium (1) gespeicherten Ausgangsbilddaten (10) des darzustellenden digitalen Dokumentes, umfassend vorgegebene Dimensionsdaten (10a) zur Darstellung des digitalen Dokumentes in einer vorbestimmten Größe, werden in einen Arbeitsspeicher (2) eingelesen (100);

1.2 die in einem digitalen Speichermedium gespeicherten . Dimensionsdaten (11) des gewünschten Ausgabeformates des auf der Ausgabevorrichtung (3) darzustellenden digitalen Dokumentes werden in den Arbeitsspeicher (2) eingelesen (110);

1.3 mittels mindestens einer mit dem Arbeitsspeicher (2) verschalteten Recheneinheit (4) werden die vorgegebenen Dimensionsdaten (10a) des digitalen Dokumentes und die Dimensionsdaten (11) des gewünschten Ausgabeformates verarbeitet und in Abhängigkeit dieser Dimensionsdaten ein Skalierungsfaktor (12) erzeugt (120);

1.4 mittels der Recheneinheit (4) werden alle skalierbaren Größen in den Ausgangsbilddaten (10) mit dem Skalierungsfaktor (12) multipliziert, und die so modifizierten Ausgangsbilddaten (10) werden als Zielbilddaten (13) im Arbeitsspeicher (2) oder einem anderen Speichermedium gespeichert (130);

1.5 die Zielbilddaten (13) werden an die Ausgabevorrichtung (3) übermittelt, und das digitale Dokument wird entsprechend der Zielbilddaten (13) auf der Ausgabevorrichtung (3) dargestellt (140);

wobei

1.6. die Ausgangsbilddaten (10) auf einem Server, insbesondere Internet-Server (I), abgelegt sind;

1.7. die Dimensionsdaten (11) des gewünschten Ausgabeformates auf einem Client-Rechner (II) abgelegt sind;

1.8. die Darstellung des digitalen Dokumenets auf einer Ausgabevorrichtung(3) des Client-Rechners (II) erfolgt mittels eines auf dem Client-Rechner ausgeführten Browsers (24), der das digitale Dokument in einem Browserfenster darstellt, wobei Dimensionsdaten (11) des gewünschten Ausgabeformates den Dimensionsdaten des Browserfensters entsprechen; **gekennzeichnet durch** die folgenden Merkmales

1.9 der Browser (24) sendet eine Anforderung an den Server, um das digitale Dokument vom Server zu empfangen;

1.10 der Server sendet die Ausgangsbitddaten (10) des digitalen Dokumentes **durch** einen Skalierungsmechanismus (22), der auf dem Server ausführbar in Form eines Skriptes oder Programmes abgelegt ist;

1.11 der Skalierungsmechanismus (22) überprüft, ob die Anforderung des Browsers (24) die Dimensionsdaten (11) des gewünschten Ausgabeformates umfaßt;

1.12 wenn die Anforderung des Browsers (24) die Dimensionsdaten (11) des gewünschten Ausgabeformates nicht umfaßt, übersendet der Skalierungsmechanismus (22) ein Skript (R) an den Browser des Client-Rechners, welches **durch** den Browser ausgeführt wird, wobei das Skript (R) die Dimensionsdaten (11) ermittelt und eine erneute Anforderung des digitalen Dokumentes an den Server sendet, wobei die Anforderung die ermittelten Dimensionsdaten (11) umfaßt;

1.13 der Skalierungsmechanismus (22) erzeugt den Skalierungsfaktor (12), modifiziert die Ausgangsbilddaten (10) gemäß Schritt 1.4 und übermittelt die Zielbilddaten (13) an den Browser (24) des Client-Rechners (II);

1.14 der Skalierungsmechanismus (22) sendet zusätzlich zu den Zielbilddaten (13) das Skript (R) und ein weiteres Skript (i) an den Browser (24) des Client-Rechners (II), wobei der Browser das weitere Skript (i) ausführt, und das weitere Skript (i) veranlaßt, daß bei festgestellten geänderten Dimensionsdaten (11) des gewünschten Ausgabeformates das Skript (R) **durch** den Browser ausgeführt wird, wobei das Skript (R) die Dimensionsdaten (11) ermittelt und eine erneute Anforderung des digitalen Dokumentes an den Server sendet, wobei die Anforderung die ermittelten Dimensionsdaten (11) umfaßt, so dass die Dimensionsdaten (11) des gewünschten Ausgabeformates wiederkehrend in Zeitintervallen überprüft (150) werden und bei geänderten Dimensionsdaten (11) der Skalierungsfaktor (12) neu erzeugt wird und die Zielbilddaten (13) gemäß Schritt 1.4 neu berechnet und das digitale Dokument gemäß Schritt 1.5 erneut dargestellt (160).

2. Verfahren nach Anspruch 1, **dadurch gekennzeichnet, daß** der Browser (24) eine Größenänderung des Browserfensters erkennt und als Reaktion ein Ereignis (E) auslöst, wobei das weitere Skript (i) veranlaßt, daß bei Auftreten des Ereignisses (E) das Skript (R) durch den Client-Rechner (II) ausgeführt wird;

3. Verfahren nach Anspruch 1, **dadurch gekennzeichnet, daß** der Skalierungsmechanismus (22) im Schritt 1.14 zusätzlich ein Überwachungsskript (Ü) an den Browser (24) des Client-Rechners (II) übersendet, wobei das Überwachungsskript (Ü) durch das weitere Skript (i) aktiviert wird und eine Größenänderung des Browserfensters erkennt und als Reaktion die Ausführung des Skriptes (R) durch den Client-Rechner verursacht.

4. Verfahren nach einem der Ansprüche 1 bis 3, **dadurch gekennzeichnet, daß** das digitale Dokument auf einem Intemet-Server (1) und der Skalierungsmechanismus (22) auf einem zwischen den Internet-Server (I) und den Client-Rechner (II) geschalteten Proxy-Server abgelegt ist und durch den Proxy-Server ausgeführt wird.

5. Verfahren nach einem der Ansprüche 1 bis 4, **dadurch gekennzeichnet, daß** das digitale Dokument die Daten einer Internetseite, insbesondere eine HTML-Datei umfaßt.

6. Verfahren nach Anspruch 5, **gekennzeichnet durch** die folgenden Merkmale:

   6.1 die Ausgangsbilddaten (10) umfassen die Daten einer Internetseite, insbesondere eine HTML-Datei;

   6.2 die Dimensionsdaten (11) des gewünschten Ausgabeformates umfassen die Fenster-Daten eines Internet-Browsers (24);

   6.3 die Dimensionsdaten (10a) des digitalen Dokumentes umfassen die Bildhöhe ($h_{HTML}$) und die Bildbreite ($b_{HTML}$) des Ausgangsbildes;

   6.4 die Fensterdaten des Internet-Browsers (24) umfassen die Höhe ($h_{Ausgabe}$) und die Breite ($b_{Ausgabe}$) der Bildfläche des Fensters;

   6.5 der Skalierungsfaktor (12) wird in Abhängigkeit der Bildhöhe ($h_{HTML}$) und/oder der Bildbreite ($b_{HTML}$) des Ausgangsbildes und der Bildhöhe ($h_{Ausgabe}$) und/oder der Bildbreite ($b_{Ausgabe}$) der Fensterbildfläche erzeugt, insbesondere in Abhängigkeit von

   $$h_{HTML} \times b_{HTML} \text{ und } h_{Ausgabe} \times b_{Ausgabe}$$

   oder $H_{HTML}$ und $h_{Ausgabe}$
   oder $b_{HTML}$ und $b_{Ausgabe}$.

7. Verfahren nach Anspruch 6 **gekennzeichnet durch** die folgenden Merkmale:

   7.1 die Ausgangsbilddaten (10) werden seriell in Form von Datenblöcken, insbesondere von HTML-Tags, in den Arbeitsspeicher (2) eingelesen;

   7.2 der Datenblock, insbesondere der HTML-Tag, wird auf skalierbare Größen überprüft;

   7.3 alle skalierbare Größen des Datenblockes, insbesondere des HTML-Tags, werden mit dem Skalierungsfaktor (12) multipliziert und **durch** das Ergebnis dieser Multiplikation ersetzt;

   7.4 der Datenblock, insbesondere der HTML-Tag, wird an den Internet-Brcwser (24) übermittelt und mittels des Internet-Browsers derart verarbeitet, daß das darzustellende Bild Zug um Zug aufgebaut wird.

8. Verfahren nach einem der Ansprüche 1 bis 7, **gekennzeichnet durch** die folgenden Merkmale:

   8.1 das digitale Dokument ist auf einem Internet-Server (I) abgelegt;

8.2 die Dimensionsdaten (11) des gewünschten Ausgabeformates werden aus einem Speichermedium, insbesondere dem Arbeitsspeicher eines Client-Rechners (II) in den Arbeitsspeicher des Client-Rechners (II) eingelesen;

8.3 der Skalierungsfaktor (12) und die Zielbilddaten (13) werden mittels der Recheneinheit des Client-Rechners (II) erzeugt und im Arbeitsspeicher oder einem anderen Speichermedium des Client-Rechners (II) gespeichert;

8.4 die Zielbilddaten (13) werden insbesondere mittels eines Internet-Browsers (24), welcher auf den Client-Rechner (II) installiert ist, auf der mit dem Client-Rechner (II) verbundenen Ausgabevorrichtung (3) dargestellt.

9. Verfahren nach einem der Ansprüche 1 bis 8, **dadurch gekennzeichnet, daß** die Dimensionsdaten (11) durch eine an der Ausgabevorrichtung (3) angeschlossene Recheneinheit (4) unmittelbar vor der Darstellung in Abhängigkeit des gewünschten Ausgabeformates erzeugt werden, so daß keine dauerhafte Speicherung der Dimensionsdaten (11) in einer Datenbank erfolgt.

10. Vorrichtung zur Darstellung eines digitalen Dokumentes auf einer pixelorientierten Ausgabevorrichtung (3), umfassend:

10.1 mindestens eine Recheneinheit (4);

10.2 einen Arbeitsspeicher (2), der mit der Recheneinheit (4) verschaltet ist;

10.3 ein Speichermedium und/oder ein Bereich des Arbeitsspeichers (2) mit den gespeicherten Ausgangsbilddaten (10) des digitalen Dokumentes, umfassend vorgegebene Dimensionsdaten (10a) zur Darstellung des digitalen Dokumentes in einer vorbestimmten Größe;

10.4 ein Speichermedium und/oder einen Bereich des Arbeitsspeichers (2) mit den Dimensionsdaten (11) des gewünschten Ausgabeformates des Zielbildes;

10.5 ein Speichermedium und/oder einen Bereich des Arbeitsspeichers (2) mit den Daten eines Skalierungsmechanismus (22) zum Skalieren der Ausgangsbilddaten (10) des digitalen Dokumentes;

10.6 ein Speichermedium und/oder einen Bereich des Arbeitsspeichers (2) zum Speichern des modifizierten digitalen Dokumentes als Zielbilddaten (13); **gekennzeichnet durch** das folgende Merkmal:

10.7 der Skalierungsmechanismus (22) ist derart auf dem Speichermedium beziehungsweise im Arbeitsspeicher (2) **durch** die mindestens eine Recheneinheit (4) ausführbar abgelegt, daß er ein Verfahren gemäß einem der Ansprüche 1 bis 9 ausführt.

11. Computersystem, umfassend einen Server insbesondere Internet-Server (I), auf dem ein digitales Dokument abgelegt ist, und einen Client-Rechner (II), auf dem ein Browser (24) zum Darstellen des digitalen Dokumentes als Zielbild auf einer an dem Client-Rechner angeschlossenen Ausgabevorrichtung (3) ausführbar abgelegt ist, **gekennzeichnet durch** die folgenden Merkmale:

11.1 auf dem Server oder auf einem zusätzlichen zwischen den Server und den Client-Rechner geschalteten Proxy-Server ist ein Skalierungsmechanismus (22) derart ausführbar abgelegt, daß das digitale Dokument bei einer Anforderung **durch** den Browser (24) des Client-Rechners (II) **durch** den Skalierungsmechanismus gesendet wird, wobei ein Verfahren gemäß einem der Ansprüche 1 bis 9 ausgeführt wird.

12. Server-System zum Erzeugen oder Speichern und zum Versenden eines digitalen Dokumentes, insbesondere einer Internetseite an ein Client-System, nach einer Anforderung des digitalen Dokumentes durch das Client-System, umfassend:

12.1 Ausgangsbilddaten (10) des digitalen Dokumentes, die auf dem Server-System abgelegt sind, umfassend Dimensionsdaten (10a) des zu versendenden digitalen Dokumentes;

12.3 einen Skalierungsmechanismus (22), der ausführbar auf dem Server-System abgelegt ist, durch den das digitale Dokument an das Client-System gesendet wird;

**gekennzeichnet durch** die folgenden Merkmale:

12.4 der Skalierungsmechanismus (22) umfaßt Mittel zum Überprüfen der Anforderung **durch** das Client-System auf Dimensionsdaten (11) eines gewünschten Ausgabeformates und zum Erfassen dieser Dimensionsdaten (11);

12.5 der Skalierungsmechanismus (22) umfaßt weiterhin Mittel zum Veranlassen einer erneuten Anforderung des auf dem Server-System abgelegten digitalen Dokumentes **durch** das Client-System, umfassend die Dimensionsdaten (11) des gewünschten Ausgabeformates, wenn die zuerst erfaßte Anforderung keine Dimensionsdaten (11) des gewünschten Ausgabeformates umfaßt;

12.6 der Skalierungsmechanismus (22) umfaßt weiterhin Mittel zum Erzeugen eines Skalierungsfaktors (12) in Abhängigkeit der Dimensionsdaten (10a) des digitalen Dokumentes und der erfaßten Dimensionsdaten (11) des gewünschten Ausgabeformates und zum Erzeugen eines modifizierten digitalen Dokumentes mit skalierten Ausgangsbilddaten in Abhängigkeit der Ausgangsbilddaten (10) und des Skalierungsfaktors (12), so daß anstelle des auf dem Server-System abgelegten digitalen Dokumentes das modifizierte digitale Dokument an das Client-System gesendet wird;

12.7 der Skalierungsmechanismus (22) umfaßt Mittel zum Veranlassen einer erneuten Anforderung des auf dem Server-System abgelegten digitalen Dokumentes **durch** das Client-System, umfassend die Dimensionsdaten (11) des gewünschten Ausgabeformates, wenn die Dimensionsdaten (11) des gewünschten Ausgabeformates geändert wurden.

13. Server-System gemäß Anspruch 12, **dadurch gekennzeichnet, daß** das Server-System einen Internet-Server (I) umfaßt, auf dem das digitale Dokument abgelegt ist, und einen Proxy-Server, auf dem der Skalierungsmechanistrus (22) ausführbar abgelegt ist.

14. Client-System zum Darstellen eines digitalen Dokumentes, insbesondere einer Internetseite, umfassend:

14.1 Mittel zum Empfangen von Ausgangsbilddaten (10) des darzustellenden digitalen Dokumentes, umfassend Dimensionsdaten (10a) zur Darstellung des digitalen Dokumentes in einer vorgegebenen Größe;

14.2 eine Ausgabevorrichtung (3) zum Darstellen des digitalen Dokumentes;

14.3 einen größenveränderbaren Zielbildbereich auf der Ausgabevorrichtung (3), in welchem das digitale Dokument als Zielbild dargestellt werden soll, umfassend Dimensionsdaten (11) des gewünschten Ausgabeformates;

14.3 einen Skalierungsmechanismus (22), der ausführbar auf dem Client-System abgelegt ist, durch den das digitale Dokument gesendet wird;

14.4 Mittel zum Darstellen des digitalen Dokumentes auf der Ausgabevorrichtung (3) in dem größenveränderbaren Zielbildbereich; **gekennzeichnet durch** die folgenden Merkmale:

14.5 der Skalierungsmechanismus (22) umfaßt Mittel zum Erfassen der Dimensionsdaten (11) des gewünschten Ausgabeformates;

14.6 der Skalierungsmechanismus (22) umfaßt Mittel zum Erzeugen eines Skalierungsfaktors (12) in Abhängigkeit der Dimensionsdaten (10a) des digitalen Dokumentes und der erfaßten Dimensionsdaten (11) des gewünschten Ausgabeformates und zum Erzeugen eines modifizierten digitalen Dokumentes mit skalierten Ausgangsbilddaten in Abhängigkeit der Ausgangsbilddaten (10) und des Skalierungsfaktors (12), so daß anstelle des ursprünglich empfangenen digitalen Dokumentes das modifizierte digitale Dokument auf der Ausgabevorrichtung (3) dargestellt wird;

14.7 der Skatierungsmechanismus (22) umfaßt Mittel zum Veranlassen einer erneuten Erzeugung eines Skalierungsfaktors (12) in Abhängigkeit der Dimensionsdaten (10a, 11) des digitalen Dokumentes und des gewünschten Ausgabeformates und einer erneuten Erzeugung eines modifizierten digitalen Dokumentes mit skalierten Ausgangsbilddaten in Abhängigkeit der Ausgangsbilddaten (10) und des Skalierungsfaktors (12), so daß eine erneute Darstellung des modifizierten digitalen Dokumentes auf der Ausgabevorrichtung (3) ausgeführt wird, wenn die Dimensionsdaten (11) des gewünschten Ausgabeformates geändert wurden.

15. Computerprogramm mit Programmcode-Mitteln, um ein Verfahren gemäß einem der Ansprüche 1 bis 9 durchzuführen, wenn das Programm auf einem Computer ausgeführt wird.

16. Computerprogramm mit Programmcode-Mitteln gemäß Anspruch 15, die auf einem computerlesbaren Datenträger gespeichert sind.

17. Datenstruktur mit elektronisch auslesbaren Steuersignalen, die so mit einem programmierbaren Computersystem zusammenwirken können, daß ein Verfahren gemäß einem der Ansprüche 1 bis 9 ausgeführt wird.

18. Digitales Speichermedium mit einer Datenstruktur gemäß Anspruch 17.

**Claims**

1. A method for the size-adjusted display of a digital document on a pixel-oriented output device (3), comprising the following steps:

1.1 the output picture data (10) of the digital document to be displayed which are stored in a digital storage medium (1) and comprise predetermined dimensional data (10a) for displaying the digital document in a predetermined size are read into a main memory (2) (100);

1.2 the dimensional data (11) of the desired output format of the digital document to be displayed on the output device (3), with the dimensional data being stored in the storage medium, are read into the main memory (2) (110);

1.3 the predetermined dimensional data (10a) of the digital document and the dimensional data (11) of the desired output format are processed by means of at least one computer unit (4) interconnected with the main memory (2) and a scaling factor (12) is produced depending on said dimensional data (120);

1.4 all scalable variables in the output picture data (10) are multiplied with the scaling factor (12) by means of the computer unit (4) and the thus modified output picture data (10) are stored as target picture data (13) in the main memory (2) or any other storage medium (130);

1.5 the target picture data (13) are transmitted to the output device (3) and the digital document is displayed according to the target picture data (13) on the output device (3) (140);

1.6 with the output picture data (10) being stored on a server, especially an internet server (I);

1.7 with the dimensional data (11) of the desired output format being stored on a client computer (II);

1.8 with the display of the digital document on an output device (3) of the client computer (II) occurring by means of a browser (24) which is executed on the client computer and displays the digital document in a browser window, with the dimensional data (11 ) of the desired output format corresponding to dimensional data of the browser window, **characterized by** the following features:

1.9 the browser (24) sends a request to the server in order to receive the digital document from the server;

1.10 the server sends the output picture data (10) of the digital document through a scaling mechanism (22) which is stored in an executable manner on the server in the form of a script or program;

1.11 the scaling mechanism (22) checks whether the request of the browser (24) comprises the dimensional data (11) of the desired output format;

1.12 when the request of the browser (24) does not comprise the dimensional data (11) of the desired output format, the scaling mechanism (22) sends a script (R) to the browser of the client computer which is executed by the browser, with the script (R) determining the dimensional data (11) and sending a renewed request for the digital document to the server, with the request comprising the determined dimensional data (11);

1.13 the scaling mechanism (22) produces the scaling factor (12), modifies the output picture data (10) according to step 1.4 and sends the target picture data (13) to the browser (24) of the client computer (II);

1.14 the scaling mechanism (22) sends in addition to the target picture data (13) the script (R) and a further script (i) to the browser (24) of the client computer (II), with the browser executing the further script (i) and the further script (i) causing that the script (R) is executed by the browser when changed dimensional data (11) of the desired output format have been established, with the script (R) determining the dimensional data (11) and sending a renewed request for the digital document to the server and with the request comprising the determined dimensional data (11), so that the dimensional data (11) of the desired output format are checked recurrently in intervals (150) and in the case of changed dimensional data (11) the scaling factor (12) is newly generated and the target picture data (13) are newly calculated according to step 1.4 and the digital document is displayed again according to step 1.5 (160)

2. A method as claimed in claim 1, **characterized in that** the browser (24) recognizes a change in the size of the browser window and, in response, initiates an event (E), with the further script (i) initiating that the script (R) is executed by the client computer (II) upon occurrence of the event (E).

3. A method as claimed in claim 1, **characterized in that** in step 1.14 the scaling mechanism (22) additionally sends a monitoring script (0) to the browser (24) of the client computer (II), with the monitoring script (Ü) being activated by the further script (i) and a change in the size of the browser window being recognized and, in response, initiating the execution of the script (R) by the client computer.

4. A method as claimed in one of the claims 1 to 3, **characterized in that** the digital document is stored on an internet server (I) and the scaling mechanism (22) is stored on a proxy server interconnected between the internet server (I) and the client computer (II) and is executed by the proxy server.

5. A method as claimed in one of the claims 1 to 4, **characterized in that** the digital document comprises the data of an internet page, especially an HTML file.

6. A method as claimed in claim 5, **characterized by** the following features:

6.1 the output picture data (10) comprise the data of an internet page, especially an HTML file;

6.2 the dimensional data (11) of the desired output format comprise the window data of an internet browser (24);

6.3 the dimensional data (10a) of the digital document comprise the picture height ($H_{HTML}$)

and the picture width ($w_{HTML}$) of the output picture;

6.4 the window data of the internet browser (24) comprise the height ($h_{output}$) und the width ($w_{output}$) of the picture area of the window;

6.5 the scaling factor (12) is produced depending on the picture height ($h_{HTML}$) and/or the picture width ($w_{HTML}$) of the output picture and the picture height ($h_{output}$) and/or the picture width ($w_{output}$) of the window picture area, especially depending on

$$h_{HTML} \times w_{HTML} \text{ and } h_{output} \times w_{output}$$

or $h_{HTML}$ and $h_{output}$
or $w_{HTML}$ and $w_{output}$.

**7.** A method as claimed in claim 6, **characterized by** the following features:

7.1 the output picture data (10) are serially read into the main memory (2) in the form of data blocks, especially HTML tags;

7.2 the data block, and especially the HTML tag, is checked for scalable variables;

7.3 all scalable variables of the data block, and especially the HTML tag, are multiplied with the scaling factor (12) and replaced by the result of the multiplication;

7.4 the data block, and especially the HTML tag, is sent to the internet browser (24) and processed by means of the internet browser in such a way that the picture to be displayed is built up step by step.

**8.** A method as claimed in one of the claims 1 to 7, **characterized by** the following features:

8.1 the digital document is stored on an internet server (I);

8.2 the dimensional data (11) of the desired output format are read into the main memory of a client computer (II) from a storage medium, especially the main memory of the client computer (II);

8.3 the scaling factor (12) and the target picture data (13) are produced by means of the computer unit of the client computer (II) and stored in the main memory or any other storage medium of the client computer (II);

8.4 the target picture data (13) are displayed especially by means of an internet browser (24) installed on the client computer (II) on the output device (3) which is connected with the client computer (II).

**9.** A method as claimed in one of the claims 1 to 8, **characterized in that** the dimensional data (11) are produced by a computer unit (4) connected to the output device (3) immediately before the display depending on the desired output format, so that no permanent storage of the dimensional data (11) in a database occurs.

**10.** An apparatus for displaying a digital document on a pixel-oriented output device (3), comprising:

10.1 at least one computer unit (4);

10.2 a main memory (2) which is interconnected with the computer unit (4);

10.3 a storage medium and/or an area of the main memory (2) with the stored output picture data (10) of the digital document, comprising predetermined dimensional data (10a) for displaying the digital document in a predetermined size;

10.4 a storage medium and/or an area of the main memory (2) with the dimensional data (11) of the desired output format of the target picture;

10.5 a storage medium and/or an area of the main memory (2) with the data of a scaling mechanism (22) for scaling the output picture data (10) of the digital document;

10.6 a storage medium and/or an area of the main memory (2) for storing the modified digital document as target picture data (13), **characterized by** the following feature:

10.7 the scaling mechanism (22) is stored on the storage medium or in the main memory (2) in a manner so as to be executable by the computer unit (4), so that it performs a method according to one of the claims 1 to 9.

**11.** A computer system, comprising a server, in particular an internet server (I) on which a digital document is stored, and a client computer (II) which contains in an executable fashion a browser (24) for displaying the digital document as a target picture on an output device (3) connected to the client computer, **characterized by** the following features:

11.1 a scaling mechanism (22) is stored in an executable fashion on the server or on a proxy server which is interposed in addition between the server and the client computer, so that the digital document, when requested by the browser (24) of the client computer (II), is sent through the scaling mechanism, with a method according to one of the claims 1 to 9 being carried out.

**12.** A server system for producing or storing and for transmitting a digital document, especially an internet page to a client system, following a request for the digital document by the client system, comprising:

12.1 output picture data (10) of the digital document which are stored on the server system, comprising dimensional data (10a) of the digital document to be sent;

12.3 a scaling mechanism (22) which is stored in an executable fashion on the server system, through which the digital document is sent to the client system, **characterized by** the following features:

12.4 the scaling mechanism (22) comprises means for checking the request by the client system for dimensional data (11) of a desired output format and for detecting said dimensional data (11);

12.5 the scaling mechanism (22) further comprises means for initiating a new request for the digital document stored on the server system by the client system, comprising the dimensional data (11) of the desired output format when the first detected request does not comprise any dimensional data (11) of the desired output format;

12.6 the scaling mechanism (22) further comprises means for generating a scaling factor (12) depending on the dimensional data (10a) of the digital document and the detected dimensional data (11) of the desired output format and for producing a modified digital document with scaled output picture data depending on the output picture data (10) and the scaling factor (12), so that instead of the digital document stored on the server system the modified digital document is sent to the client system;

12.7 the scaling mechanism (22) comprises means for initiating a renewed request for the digital document stored on the server system by the client system, comprising the dimensional data (11) of the desired output format when the dimensional data (11) of the desired output format have changed.

13. A server system according to claim 12, **characterized in that** the server system comprises an internet server (I) on which the digital document is stored and a proxy server on which the scaling mechanism (22) is stored in an executable fashion.

14. A client system for displaying a digital document, especially an internet page, comprising:

14.1 means for receiving output picture data (10) of the digital document to be displayed, comprising dimensional data (10a) for displaying the digital document in a predetermined size;

14.2 an output device (3) for displaying the digital document;

14.3 a size-variable target picture area on the output device (3) in which the digital document will be displayed as a target picture, comprising dimensional data (11) of the desired output format;

14.3 a scaling mechanism (22) which is stored in an executable fashion on the client system and through which the digital document is sent;

14.4 means for displaying the digital document as a target picture on the output device (3) in the size-variable target picture area, **characterized by** the following features:

14.5 the scaling mechanism (22) comprises means for detecting the dimensional data (11) of the desired output format;

14.6 the scaling mechanism (22) comprises means for producing a scaling factor (12) depending on the dimensional data (10a) of the digital document and the detected dimensional data (11) of the desired output format and for producing a modified digital document with scaled output picture data depending on the output picture data (10) and the scaling factor (12), so that instead of the originally received digital document the modified digital document is displayed on the output device (3); 14.7 the scaling mechanism (22) comprises means for initiating a renewed generation of a scaling factor (12) depending on the dimensional data (10a, 11) of the digital document and the desired output format and a renewed generation of a modified digital document with scaled output picture data depending on the output picture data (10) and the scaling factor (12), so that a renewed display of the modified digital document on the output device (3) is performed when the dimensional data (11) of the desired output format have been changed.

15. A computer program with program code means in order to perform a method according to one of the claims 1 to 9 when the program is executed on a computer.

16. A computer program with program code means according to claim 15 which are stored on a computer-readable data medium.

17. A data structure with electronically readable control signals which can cooperate with a programmable computer system in such a way that a method according to one of the claims 1 to 9 is performed.

18. A digital storage medium with a data structure according to claim 17.

## Revendications

1. Procédé pour reproduire à une échelle adaptée un document numérique sur un dispositif de sortie orienté pixel (3), du type comprenant les étapes suivantes :

   1.1. les données brutes d'image (10) du document numérique qu'il y a lieu de reproduire sont enregistrées (100) sur une mémoire de travail (2), ces données brutes étant stockées sur un support mémoire numérique (1) et comprenant les données de dimensionnement (10a) imposées en vue de reproduire le document numérique à une échelle prédéterminée ;

   1.2 les données de dimensionnement (11) du format de sortie souhaité pour le document numérique qu'il y a lieu de reproduire sur le dispositif de sortie (3) sont enregistrées (110) sur une mémoire de travail (2), ces données de dimensionnement étant stockées sur un support mémoire numérique ;

   1.3 les données de dimensionnement (10a) du document numérique imposées et les données de dimensionnement (11 ) du format de sortie souhaité sont traitées au moyen d'au moins une unité de traitement (4) connectée à la mémoire de travail (2) et un facteur d'échelle (12) est généré (120) en fonction de ces données de dimensionnement ;

   1.4 toutes les grandeurs scalables dans les données brutes d'image (10) sont multipliées par le facteur d'échelle (12) au moyen de l'unité de traitement (4) et les données brutes d'image (10) ainsi modifiées sont stockées sur la mémoire de travail (2) ou sur un autre support mémoire (130) sous forme de données finales d'image (13) ;

   1.5 les données finales d'image (13) sont transmises au dispositif de sortie (3) et le document numérique est reproduit (140) sur le dispositif de sortie (3) en fonction des données finales d'image (13) ;

   1.6 les données brutes d'image (10) étant stockées sur un serveur, notamment un serveur Internet (I) ;

   1.7 les données de dimensionnement (11 ) du format de sortie souhaité étant stockées sur un ordinateur client (II) ;

   1.8 le document numérique étant reproduit sur un dispositif de sortie (3) de l'ordinateur client (II) au moyen d'un navigateur (24) installé sur l'ordinateur client, lequel navigateur reproduit le document numérique dans une fenêtre du navigateur, les données de dimensionnement (11) du format de sortie souhaité correspondant aux données de dimensionnement de la fenêtre du navigateur ;

   **caractérisé par** les particularités suivantes :

   1.9 le navigateur (24) envoie au serveur une requête pour recevoir de celui-ci le document numérique ;

   1.10 le serveur envoie les données brutes d'image (10) du document numérique par un mécanisme de mise à l'échelle (22) qui est stocké sur le serveur sous forme de script ou de programme exécutable ;

   1.11 le mécanisme de mise à l'échelle (22) vérifie si la requête du navigateur (24) comprend les données de dimensionnement (11) du format de sortie souhaité ;

   1.12 si la requête du navigateur (24) ne comprend pas les données de dimensionnement (11) du format de sortie souhaité, le mécanisme de mise à l'échelle (22) envoie au navigateur de l'ordinateur client un script (R) qui est exécuté par le navigateur, le script (R) détectant les données de dimensionnement (11) et envoyant au serveur une nouvelle requête du document numérique, cette requête comprenant les données de dimensionnement (11) détectées ;

   1.13 le mécanisme de mise à l'échelle (22) génère le facteur d'échelle (12), modifie les données brutes d'image (10) conformément à l'étape 1.4 et transmet les données finales d'image (13) au navigateur (24) de l'ordinateur client (II) ;

   1.14 le mécanisme de mise à l'échelle (22) envoie au navigateur (24) de l'ordinateur client (II), outre les données finales d'image (13), le script (R) et un autre script (i), le navigateur exécutant l'autre script (i) et l'autre script (i), constatant que les données de dimensionnement (11) du format de sortie ont été modifiées, invitant le navigateur à exécuter le script (R), le script (R) détectant les données de dimensionnement (11 ) et envoyant au serveur une nouvelle requête du document numérique, cette requête comprenant les données de dimensionnement (11) détectées, de sorte que les données de dimensionnement (11) du format de sortie souhaité sont vérifiées (150) à intervalles réguliers et que, si les données de dimensionnement (11) ont été modifiées, un nouveau facteur d'échelle (12) est généré, les données finales d'image (13) recalculées conformément à l'étape 1.4 et le document numérique reproduit une nouvelle fois (160) conformément à l'étape 1.5.

2. Procédé selon la revendication 1, **caractérisé en ce que** le navigateur (24) reconnaît un changement dans les dimensions de la fenêtre du navigateur et déclenche, en réaction à ce changement, un événement (E), l'autre script (i) invitant l'ordinateur client (II) à exécuter le script (R) lorsque cet événement (E) a lieu.

**3.** Procédé selon la revendication 1, **caractérisé en ce que** dans l'étape 1.14 le mécanisme de mise à l'échelle (22) envoie en outre au navigateur (24) de l'ordinateur client (II) un script de contrôle (Ü), ce script de contrôle (Ü) étant activé par l'autre script (i) et reconnaissant un changement dans les dimensions de la fenêtre du navigateur et provoquant, en réaction à ce changement, l'exécution du script (R) par l'ordinateur client.

**4.** Procédé selon l'une quelconque des revendications 1 à 3, **caractérisé en ce que** le document numérique est stocké sur un serveur Internet (I) et que le mécanisme de mise à l'échelle (22) est stocké sur un serveur proxy interposé entre le serveur Internet (I) et l'ordinateur client (II) et est exécuté par le serveur proxy.

**5.** Procédé selon l'une quelconque des revendications 1 à 4, **caractérisé en ce que** le document numérique comprend les données d'une page Internet, notamment d'un fichier HTML.

**6.** Procédé selon la revendication 5, **caractérisé par** les particularités suivantes :

6.1 les données brutes d'image (10) comprennent les données d'une page Internet, notamment d'un fichier HTML ;
6.2 les données de dimensionnement (11) du format de sortie souhaité comprennent les données fenêtre d'un navigateur Internet (24) ;
6.3 les données de dimensionnement (10a) du document numérique comprennent la hauteur ($h_{HTML}$) et la largeur ($b_{HTML}$) de l'image de départ ;
6.4 les données fenêtre du navigateur Internet (24) comprennent la hauteur ($h_{sortie}$) et la largeur ($b_{sortie}$) de la surface d'affichage de la fenêtre ;
6.5 le facteur d'échelle (12) est généré en fonction de la hauteur ($h_{HTML}$) et/ou de la largeur ($b_{HTML}$) de l'image de départ et de la hauteur ($h_{sortie}$) et/ou de la largeur ($b_{sortie}$) de la surface d'affichage de la fenêtre, notamment en fonction de

$$h_{HTML} \; X \; b_{HTML} \; \text{et de} \; h_{sortie} \; x \; b_{sortie}$$

ou de $h_{HTML}$ et de $h_{sortie}$
ou de $b_{HTML}$ et de $b_{sortie}$

**7.** Procédé selon la revendication 6, **caractérisé par** les particularités suivantes :

7.1 les données brutes d'image (10) sont enregistrées en série sur la mémoire de travail (2) sous forme de blocs de données, notamment de balises HTML;
7.2 des grandeurs scalables sont cherchées dans le bloc de données, notamment dans la balise HTML;
7.3 toutes les grandeurs scalables du bloc de données, notamment de la balise HTML, sont multipliées par le facteur d'échelle (12) et sont remplacées par le résultat de cette multiplication ;
7.4 le bloc de données, notamment la balise HTML, est transmis au navigateur Internet (24) et est traité au moyen du navigateur Internet de manière à construire successivement l'image à reproduire.

**8.** Procédé selon l'une quelconque des revendications 1 à 7, **caractérisé par** les particularités suivantes :

8.1 le document numérique est stocké sur un serveur Internet (I) ;
8.2 les données de dimensionnement (11) du format de sortie souhaité sont lues dans un support mémoire, notamment dans la mémoire de travail d'un ordinateur client (II), et enregistrées dans la mémoire de travail de l'ordinateur client (II) ;
8.3 le facteur d'échelle (12) et les données finales d'image (13) sont générés au moyen de l'unité de traitement de l'ordinateur client (II) et sont stockés sur la mémoire de travail ou sur un autre support mémoire de l'ordinateur client (II) ;
8.4 les données finales d'image (13) sont reproduites sur le dispositif de sortie (3) relié à l'ordinateur client (II), notamment au moyen d'un navigateur Internet (24) installé sur l'ordinateur client (II).

**9.** Procédé selon l'une quelconque des revendications 1 à 8, **caractérisé en ce que** les données de dimensionnement (11) sont générées par une unité de traitement (4) connectée au dispositif de sortie (3) en fonction du format de sortie souhaité juste avant la reproduction de sorte que les données de dimensionnement (11) ne sont pas stockées en permanence dans une banque de données.

**10.** Dispositif destiné à reproduire un document numérique sur un dispositif de sortie orienté pixel (3) comprenant :

10.1 au moins une unité de traitement (4) ;
10.2 une mémoire de travail (2) qui est connectée à l'unité de traitement (4) ;
10.3 un support mémoire et/ou une zone de la mémoire de travail (2) avec les données brutes d'image (10) du document numérique mises en mémoire, comprenant les données de dimensionnement (10a) imposées pour reproduire le document numérique à une échelle prédéterminée ;

10.4 un support mémoire et/ou une zone de la mémoire de travail (2) avec les données de dimensionnement (11) du format de sortie souhaité pour l'image finale ;

10.5 un support mémoire et/ou une zone de la mémoire de travail (2) avec les données d'un mécanisme de mise à l'échelle (22) pour la mise à l'échelle des données brutes d'image (10) du document numérique ;

10.6 un support mémoire et/ou une zone de la mémoire de travail (2) pour mettre en mémoire le document numérique modifié sous forme de données finales d'image (13) ;

**caractérisé par** la particularité suivante :

10.7 le mécanisme de mise à l'échelle (22) est stocké en forme exécutable sur le support mémoire, voire sur la mémoire de travail (2) de sorte qu'il exécute un procédé selon l'une quelconque des revendications 1 à 9.

**11.** Système informatique comprenant un serveur, notamment un serveur Internet (I) sur lequel est stocké un document numérique et un ordinateur client (II) sur lequel est stocké en forme exécutable un navigateur (24) pour reproduire le document numérique sous forme d'image finale sur un dispositif de sortie (3) connecté à l'ordinateur client, **caractérisé par** les particularités suivantes :

11.1 sur le serveur ou sur un serveur proxy interposé entre le serveur et l'ordinateur client un mécanisme de mise à l'échelle (22) est stocké en forme exécutable de telle sorte qu'à la demande du navigateur (24) de l'ordinateur client (II) le document numérique est envoyé par le mécanisme de mise à l'échelle, un procédé conforme à l'une quelconque des revendications 1 à 9 étant exécuté.

**12.** Système serveur pour générer ou mémoriser ainsi que pour envoyer un document numérique, notamment une page Internet à un système client, après demande du document numérique par le système client, comprenant :

12.1 des données brutes d'image (10) du document numérique qui sont stockées sur le système serveur, comprenant des données de dimensionnement (10a) du document numérique qu'il y a lieu d'envoyer ;

12.2 un mécanisme de mise à l'échelle (22) qui est stocké sur le système serveur en forme exécutable et par lequel le document numérique est envoyé au système client;

**caractérisé par** les particularités suivantes :

12.3 le mécanisme de mise à l'échelle (22) comprend des moyens pour rechercher dans la requête du système client des données de dimensionnement (11) d'un format de sortie souhaité et pour saisir ces données de dimensionnement (11) ;

12.4 le mécanisme de mise à l'échelle (22) comprend par ailleurs des moyens pour inviter le système client à faire une nouvelle requête du document numérique stocké sur le système serveur comprenant les données de dimensionnement (11) du format de sortie souhaité si la première requête saisie ne contient pas de données de dimensionnement (11) du format de sortie souhaité ;

12.5 le mécanisme de mise à l'échelle (22) comprend par ailleurs des moyens pour générer un facteur d'échelle (12) en fonction des données de dimensionnement (10a) du document numérique et des données de dimensionnement (11) du format de sortie souhaité saisies et pour générer un document numérique modifié avec des données brutes d'image en fonction des données brutes d'image (10) et du facteur d'échelle (12) de sorte que le document numérique envoyé au système client n'est pas le document numérique stocké sur le système serveur mais le document numérique modifié ;

12.6 le mécanisme de mise à l'échelle (22) comprend des moyens pour inviter le système client à faire une nouvelle requête du document numérique stocké sur le système serveur comprenant les données de dimensionnement (11) du format de sortie souhaité si les données de dimensionnement (11) du format de sortie souhaité ont été modifiées.

**13.** Système serveur selon la revendication 12, **caractérisé en ce que** le système serveur comprend un serveur Internet (I) sur lequel est stocké le document numérique et un serveur proxy sur lequel est stocké en forme exécutable le mécanisme de mise à l'échelle (22).

**14.** Système client pour reproduire un document numérique, notamment une page Internet, comprenant :

14.1 des moyens pour recevoir des données brutes d'image (10) du document numérique qu'il y a lieu de reproduire comprenant les données de dimensionnement (10a) en vue de la reproduction du document numérique à une échelle imposée ;

14.2 un dispositif de sortie (3) pour reproduire le document numérique ;

14.3 une zone d'image finale de taille modifiable sur le dispositif de sortie (3) dans laquelle il y a lieu de reproduire le document numérique sous forme d'image finale, comprenant des données de dimensionnement (11) du format de sortie souhaité ;

14.4 un mécanisme de mise à l'échelle (22) qui est stocké en forme exécutable sur le système client et par lequel le document numérique est envoyé ;

14.5 des moyens pour reproduire le document numérique sur le dispositif de sortie (3) dans la zone d'image finale de taille modifiable ;
**caractérisé par** les particularités suivantes :

14.6 le mécanisme de mise à l'échelle (22) comprend des moyens pour saisir les données de dimensionnement (11) du format de sortie souhaité ;

14.7 le mécanisme de mise à l'échelle (22) comprend des moyens pour générer un facteur d'échelle (12) en fonction des données de dimensionnement (10a) du document numérique et des données de dimensionnement (11) saisies du format de sortie souhaité et pour générer un document numérique modifié avec des données brutes d'image mises à l'échelle en fonction des données brutes d'image (10) et du facteur d'échelle (12) de sorte que le document numérique reproduit sur le dispositif de sortie (3) n'est plus le document numérique reçu initialement mais le document numérique modifié ;

14.8 le mécanisme de mise à l'échelle (22) comprend des moyens pour initier la formation d'un nouveau facteur d'échelle (12) en fonction des données de dimensionnement (10a, 11) du document numérique et du format de sortie souhaité et la formation d'un nouveau document numérique modifié avec des données brutes d'image mises à l'échelle en fonction des données brutes d'image (10) et du facteur d'échelle (12) de sorte qu'une nouvelle reproduction du document numérique modifié est exécutée sur le dispositif de sortie (3) en cas de modification des données de dimensionnement (11) du format de sortie souhaité.

15. Programme d'ordinateur avec des moyens code pour mettre en oeuvre un procédé selon l'une quelconque des revendications 1 à 9 si le programme est exécuté sur un ordinateur.

16. Programme d'ordinateur avec des moyens code selon la revendication 15, lesquels sont mis en mémoire sur un support de données lisible par un ordinateur.

17. Structure de données avec des signaux de commande lisibles électroniquement qui sont capables de coopérer de telle sorte avec un système informatique programmable qu'un procédé selon l'une quelconque des revendications 1 à 9 est exécuté.

18. Support mémoire numérique avec une structure de données selon la revendication 17.

| 12 | Skalierungsfaktor |

| 10 | Ausgangsbilddaten |
| 10a | Dimensionsdaten |

| Zielbilddaten | 13 |

| 11 | Dimensionsdaten |

130
120
100
140,
(160)
110,
(150)
2
1
4
5
3

Fig. 1

$h_{HTML}$

$b_{HTML}$

**2**

**4**

HTML-Datei **20**

**23**

Skalierungs- **22**
mechanismus

Zielbilddaten

**I**

**6**

Internet-Server

Client-Rechner

**3**

$h_{Ausgabe}$

$b_{Ausgabe}$

**II**

**4**

**2**

Internet-Browser **24**

Dimensions- **11**
daten

**Fig. 2**

Start

HTML-Quelle (Datei-/Datenstrom)
$h_{HTML}$ x $b_{HTML}$
$h_{Ausgabe}$ x $b_{Ausgabe}$
Browsertyp
Betriebssystem
Optionen

*200*

Berechnung des *Skalierungsfaktors*
(im folgendenden abgekürzt mit DCS) auf Basis
Eingabehöhe $h_{HTML}$ x Eingabebreite $b_{HTML}$ und
Ausgabehöhe $h_{Ausgabe}$ x Ausgabebreite $b_{Ausgabe}$
unter Berücksichtigung der Ausgabebedingungen
Browsertyp, Betriebssystem und ggf. Optionen

*210*

Nimm den ersten HTML-Tag aus der HTML-Quelle

*220*

Öffnet dieser Tag einen in sich
geschlossenen Bereich? Das ist z. B.
eine Formatvorlage (Stylesheet),
Scriptbereich (VB-, Java-Script) u.ä.

*230*

ja → Nimm den gesamten Bereich

*240*

nein

Analysiere diesen Tag / Bereich:
Multipliziere und ersetze alle skalierbaren
Zahlen mit DCS.
Nicht skalierbare Zahlen bleiben unverändert.
Beispiele für nicht skalierbare Zahlen:
Tabellenspalten u. -zeilen, Kommentarfelder,
optional auch prozentuale Angaben, alle normalen
Zahlen in Scriptbereichen, etc.

*250*

Für Scriptbereiche gilt folgende Ausnahme:
ist die Zeile „dcs = 1" vorhanden, wird die
Zahl 1 durch DCS ersetzt;
somit ist gewährleistet, daß ein dynamisch
positioniertes Element (z. B. innerhalb einer
Pfadanimation) seine nunmehr relativen
Koordinaten beibehält, wenn "dsc" als
Faktor mit einbezogen ist.

Gibt es einen weiteren Tag in
der HTML-Quelle?

*260*

ja

nein

Ende

Fig. 3

Fig. 4

**Start**

Ermittle maximale Ausgabehöhe und -breite  300

Ist diese HTML-Datei durch dynamicScale ausgegeben?  310  ja

nein

Lade diese HTML-Datei mit dynamicScale und über-gebe die ermittelte Höhe u. Breite als Parameter  320

U1

**Ende**

Unterprogramm U1  Größenüber-wachung

Aktuelle Ausgabegröße ungleich der ermittelten Ausgabegröße?  330

ja

Lade diese HTML-Datei mit dynamicScale und über-gebe die neue Höhe u. Breite als Parameter  340

**Ende U1**

```html
<!-- Name: dcs.html -->
<!-- Programmiersprache: HTML-->
<html>
<head>
<title>dynamicScale</title>
<meta http-equiv="Content-Type" content="text/html; charset=iso-8859-1">
<script language="JavaScript"><!--
var dcs=1; // --></script>
<style type="text/css"><!--
.txt { font-family: "Courier New", Courier, mono; font-size: 12px}
.txtgr { font-family: "Courier New", Courier, mono; font-size: 16px}
.txtbig { font-family: "Courier New", Courier, mono; font-size: 45px}
-->
</style>
</head>
<body bgcolor="#FFFFFF" text="#000000">
<script language="JavaScript" src="dcs.js"></script>
<table width="752" border="0" cellspacing="0" cellpadding="0">
<tr>
<td rowspan="2">
<img src="img/cham.jpg" width="348" height="195">
</td>
<td width="404">
<table width="404" border="0" cellspacing="0" cellpadding="0" height="140">
<tr>
<td width="202" valign="top">
<font face="Courier New, Courier, mono" size="2" class="txt">
<b>Dieses neue Client/Server-<br>
Tool pr&auml;sentiert Ihren <br>
Internet-Auftritt immer<br>
in optimaler Gr&ouml;&szlig;e. <br>
Stufenlos, ohne Geschwin-<br>
digkeitsverlust, Browser-</b></font></td>
<td width="202" valign="top">
<font face="Courier New, Courier, mono" size="2" class="txt">
<b>und Betriebssystemunab-<br>
h&auml;ngig. <font color="#FF00FF">Am besten testen:</font><br>
Browserfenster beliebig<br>
auf- und zuziehen und<br>
die dynamische Seiten-<br>
Anpassung erleben.</b></font>
</td></tr>
<tr><td align="right">
<img src="img/dynamicScale.gif" width="404" height="103">
</td></tr>
</table>
</body>
</html>
```

**Fig. 5**

```
// vateiname: dcs.js
// Programmiersprache: Javascript
// Muss unmittelbar unter dem Body-Tag der HTML-Datei eingebunden werden
// und ruft bei Veränderung der Fenstergröße die Datei erneut vom Server
// auf. Dieses Beispiel ist speziell auf die HTML-Datei "dcs.html" zu
// geschnitten und dient nur zur verdeutlichung des Ablaufs.

function dcs_findWH() {
dcsW = (document.layers)? window.innerWidth : document.body.offsetWidth.
dcsH = (document.layers)? window.innerHeight : document.body.offsetHeight
}

dcs_findWH()

nav = (navigator.appVersion.indexOf('Macintosh')!=-1)?'m':'p'
nav+= (document.layers) ? 'n':'i'

htmlname='dcs.html'

if (location.search=='') {

location.replace('dcs.php'+'?html='+htmlname+'&dcsW='+dcsW+'&dcsH='+d
csH+'&nav='+nav)
}

function dcs_resize() {
        dcs_findWH()

location.replace('dcs.php3'+'?html='+htmlname+'&dcsW='+dcsW+'&dcsH='+
dcsH+'&nav='+nav)
}

onresize=dcs_resize
```

**Fig. 6**

```php
<!

# Folgender Code steht in der Version 1.01 zur Verfügung
# Programmiersprache: PHP
# Dateiname: dcs.php
# Nehmen wir an, der Client fordert eine Datei Namens xyz.html und hat eine Fentergrösse
# von 500 Pixel (dcsW) x 300 Pixel (dscH) und benutzt Macintosh-System mit Netscape-
# Browser;dann wird dieses Programm bspsweise folgendermassen vom Client-Computer
# angefordert: dcs.php?html=xyz.html&dcsW=500&dcsH=300&nav=mn

$dcs_version = 1.01;

global $dynamicScale;

if ($html) {
  $file = @file($html);
  if ($file) {
    $data=implode($file, " ");
    $file="";
  } else {
    dcs_die("<b>Fehler:</b> falscher Pfad oder Dateiname: \"$html\".");
  }
} else {
  dcs_die("<b>Fehler:</b> Keine Parameter.");
}

if ($dcsW) {

        $mac=(strstr($nav,'m'))?1:0;
        $ns=(strstr($nav,'n'))?1:0;

        if ($ns) {
                $dcsW = $dcsW-32;
        } else {
                $dcsW = $dcsW-26;
        }

        $dynamicScale = $dcsW / 752;

}

if (empty($dynamicScale)) { $dynamicScale=1; }

echo DSC_html($data);

function DSC_html($data) {
  $dcs_out = "";
  $i=0;
```

**Fig. 7a**

```
wnile ( $i<strlen($data) ) {

        if ( substr($data, $i, 1)=="<" ) { // puffere Tag:
                $buf="";
                do {
                $ch=substr($data, $i, 1);
                        $buf.=$ch;
                        $i++;
                } while ( ($ch!=' ') && ($ch!='>') && ($i < strlen($data))  );

                // nun wird geschaut, um welchen Tag es sich handelt
                $TagArt = array(0, "");
                if ( strstr(strtolower($buf),"<img")!="" ) $TagArt=array(1, "img");
                elseif ( strstr(strtolower($buf),"<font")!="" ) $TagArt = array(1, "font");
                elseif ( strstr(strtolower($buf),"<style")!="" ) $TagArt = array(2, "style");
                elseif ( strstr(strtolower($buf),"<script")!="" ) $TagArt = array(2, "script");
                if ($ch==' ') {                          // schliess diesen Tag noch
                        do {
                        $ch=substr($data, $i, 1);
                                $buf.=$ch;
                                $i++;
                        } while ( ($ch!='>') );
                }

                if ( $TagArt[0]==2 ) { // hole den gesamten Tag mit Terminierung
                        while ( (strstr(strtolower($buf), "</$TagArt[1]>")=="") && ($i <
strlen($data)) ) {
                                $buf.=substr($data, $i, 1);
                                $i++;
                        }
                }

                $buf = dynamic_parse($buf); // und parse ihn durch die operatoren...



        } else {                        // else puffere alle Daten, bis mal ein Tag anfängt:
                $buf="";
                while ( ( substr($data, $i, 1)!="<" ) && ($i< strlen($data)) ) {
                  $buf.=substr($data, $i, 1);
                  $i++;
                }

        }

        $dcs_out.=$buf;

}
return $dcs_out;
```

**Fig. 7b**

```
}

function dynamic_parse($buf) {
  global $dynamicScale;
  $ispix=0;
  $isstyle=0;
  $istextarea=0;

  $arr=split(" ", $buf);

  for ($i=0; $i<count($arr);$i++) {

      if ( strstr(strtolower($arr[$i]), "\"pix.gif\"")!="" ) $ispix=1;
      if ( strstr(strtolower($arr[$i]), "<style")!="" ) $isstyle=1;
      if ( strstr(strtolower($arr[$i]), "<textarea")!="" ) $istextarea=1;

      //$arr[$i] = dynamic_value( $arr[$i], $dynamicScale, $ispix );
      //
      ****************************************************************
      ****
      if (!$isstyle) {
      if ( str_in($arr[$i], "width=") ) $arr[$i]=dynamic_value($arr[$i], $dynamicScale,
$ispix);
          elseif (str_in($arr[$i], "height=") ) $arr[$i]=dynamic_value($arr[$i], $dynamicScale,
$ispix);
          elseif (str_in($arr[$i], "vspace=") ) $arr[$i]=dynamic_value($arr[$i], $dynamicScale,
$ispix);
          elseif (str_in($arr[$i], "hspace=") ) $arr[$i]=dynamic_value($arr[$i],
$dynamicScale, $ispix);
          elseif (str_in($arr[$i], "border=") ) $arr[$i]=dynamic_value($arr[$i], $dynamicScale,
$ispix);
          elseif (str_in($arr[$i], "size=") ) $arr[$i]=dynamic_value($arr[$i], $dynamicScale,
$ispix);
          elseif (str_in($arr[$i], "cellspacing=") ) $arr[$i]=dynamic_value($arr[$i],
$dynamicScale, $ispix);
          elseif (str_in($arr[$i], "cellpadding=") ) $arr[$i]=dynamic_value($arr[$i],
$dynamicScale, $ispix);
          elseif (str_in($arr[$i], "left:") ) $arr[$i]=dynamic_value($arr[$i], $dynamicScale,
$ispix);
          elseif (str_in($arr[$i], "top:") ) $arr[$i]=dynamic_value($arr[$i], $dynamicScale,
$ispix);
          elseif (str_in($arr[$i], "width:") ) $arr[$i]=dynamic_value($arr[$i], $dynamicScale,
$ispix);
          elseif (str_in($arr[$i], "height:") ) $arr[$i]=dynamic_value($arr[$i], $dynamicScale,
$ispix);
          elseif (str_in($arr[$i], "action=") ) $arr[$i]=$arr[$i];
          elseif (str_in($arr[$i], "rowspan=") ) $arr[$i]=$arr[$i];
          elseif (str_in($arr[$i], "colspan=") ) $arr[$i]=$arr[$i];
          elseif (istextarea && (str_in($arr[$i], "cols")) ) $arr[$i]=dynamic_value($arr[$i],
$dynamicScale, $ispix);
```

Fig. 7c

29

```
        elseif (istextarea && (str_in($arr[$i], "rows")) ) $arr[$i]=dynamic_value($arr[$i],
$dynamicScale, $ispix);
        } else {
                $arr[$i]=dynamic_value($arr[$i], $dynamicScale, $ispix);
        }

}

$buf=implode(" ", $arr);


return $buf;
}



function dynamic_value($val, $dynamicScale, $ispix) {

$i=0;

$buf1="";
$buf2="";
$buf3="";

$ch="a";
while ( ($i<strlen($val)) && (!is_z($ch)) ){
        $ch=substr($val,$i,1);
        if (!is_z($ch)) {
                $buf1.=$ch;
                $i++;
        }
}
while (($i<strlen($val)) && (is_z($ch)) ) {
        $ch=substr($val,$i,1);
        if (is_z($ch)) {
                $buf2.=$ch;
                $i++;
        }
}
while ( ($i<strlen($val)) && (!is_z($ch)) ) {
        $ch=substr($val,$i,1);
        if (!is_z($ch)) {
                $buf3.=$ch;
                $i++;
        }
}
}
```

**Fig. 7d**

```
if ($buf2=="") {
```

```
    $val=$buf1.$buf3;
  } else {
    if (!( ($ispix)&&($buf2=="1") )) {
        $buf2=floor($buf2*$dynamicScale);
    }

    $val=$buf1.$buf2.$buf3;
  }

  return $val;
}


function is_z($ch) {
  $za=array('0','1','2','3','4','5','6','7','8','9');
  $retval=0;
  $z=-1;
  while ( (!$retval) && ($z<9) ) {
        $z++;
        if ( $za[$z]==$ch ) $retval=1;
  }
  return $retval;
}

function str_in($str1,$str2) {
  if ( strstr(strtolower(chop($str1)), $str2)!='' ) return true;
  else return false;
}


function dcs_die($diestr) {
  if ($diestr) echo $diestr;
  die("<br><b>Programm gestoppt.</b><br><br><b>dynamicScale(c)2000
STUDIOO</b>");
}
# Noch zu tun: dcs=1 Variable im JavaScript durch Tatsächlichen ersetzen
# location.href beim ersten aufruf im dcs-script noch korrekt aufschlüsseln: domain,
# pfad, html-dateiname, und paramter, damit später hrefs angeglichen werden können
# in jeden der hrefs ein onClick einbauen, das jeden Link mit den richtigen
# attributen nach dem '?' ausrüstet.
?>
```

**Fig. 7e**

Fig. 8

Fig. 9

a

b

c

Fig. 10